# FASCICULE DE BREVET EUROPEEN

(11) **EP 3 887 115 B1**
(45) Date de publication et mention de la délivrance du brevet: **22.11.2023**
(21) Numéro de dépôt: 19842788.2
(22) Date de dépôt: 25.11.2019
(51) Int. Cl.: B29B 15/12

(54) **PROCEDE D'IMPREGNATION D'UN MATERIAU FIBREUX EN LIT FLUIDISE INTERPENETRE**
VERFAHREN ZUM IMPRÄGNIEREN EINES FASERMATERIALS IN EINEM DURCHDRUNGENEN FLIESSBETT
METHOD FOR IMPREGNATING A FIBROUS MATERIAL IN AN INTERPENETRATED FLUIDISED BED

(30) Priorité: 26.11.2018 FR 1871841
(43) Date de publication de la demande: 06.10.2021
(73) Titulaire: ARKEMA FRANCE, 92700 Colombes (FR)
(72) Inventeur: HOCHSTETTER, Gilles, 92705 Colombes Cedex (FR); BABEAU, Arthur, Pierre, 64170 Lacq (FR); SALINIER, Axel, 64170 Lacq (FR); SAVART, Thibaut, 64170 Lacq (FR)
(86) Numéro de dépôt international: PCT/FR2019/052799
(87) Numéro de publication internationale: WO 2020/109709

(56) Documents cités:
- WO-A1-2018/115736
- JP-A- H0 740 341

## Description

La présente invention concerne un procédé de fabrication d'un matériau fibreux pré-imprégné de polymère thermoplastique.

Plus particulièrement, l'invention se rapporte à un procédé de fabrication d'un matériau fibreux pré-imprégné comprenant une étape d'imprégnation sous forme de poudre pour la préparation d'un matériau fibreux pré-imprégné, notamment en lit fluidisé interpénétré, en vue de l'obtention de rubans de matériau fibreux pré-imprégné, de dimensions calibrées, directement utilisables pour la fabrication de pièces composites tridimensionnelles.

Le principe de fonctionnement du lit fluidisé de poudre induit son lot de problématiques bien connu de l'homme de l'art. En effet, ce dernier sait que tout élément introduit dans un lit de poudre en fluidisation va perturber l'écoulement des gaz de fluidisation et donc les écoulements de poudre. En particulier, il est connu de l'homme de l'art que l'introduction d'un élément « traversant » (c'est-à-dire étant en partie immergé dans la poudre en fluidisation et en partie en dehors de ce lit fluidisé de poudre) va écranter les passages de gaz de fluidisation à proximité de cet élément traversant. Ce passage par conséquent défavorisé de gaz de fluidisation ne permet pas de conserver une concentration constante de poudre localement dans une zone proche de cette perturbation des flux de gaz. Cette perturbation, qui peut être gérée et maitrisée pour une mèche de fibres voire plusieurs mèches de fibres séparées d'une certaine distance, ne l'est pas aisément et de manière stable pour une nappe de mèches de fibres collées les unes aux autres. Aussi, on observe généralement lors de l'assemblage de mèches de fibres avant ou au niveau du lit fluidisé une inhomogénéité d'emport de poudre par la nappe de mèches ; le taux de poudre étant généralement plus faible sur les mèches de fibres situées au centre de la nappe.

La demande internationale WO 2018/115736, décrit un procédé d'imprégnation de plusieurs mèches en parallèle dans un même lit fluidisé, au moyen d'une série d'embarrages; en prenant garde de conserver un écart même minime entre les mèches.

L'un des inconvénients malgré tout de cette méthode réside dans la largeur totale de la ligne d'imprégnation surtout si l'on veut multiplier les mèches en parallèle pour améliorer la productivité de la ligne. Cette largeur maximale est induite par non seulement la largeur de chaque mèche de fibres dans le bain de fluidisation mais aussi par l'écart intermèche nécessaire pour ne pas perturber la fluidisation d'une fibre trop proche de sa proche voisine. On peut arriver, dans des cas les plus perturbés, à doubler la largeur de la ligne d'imprégnation du fait de cet espace intermèche.

JP H07 40341 décrit un procédé d'imprégnation d'un matériau fibreux en fibre de verre par du chlorure de vinyle sous forme de poudre, ledit matériau fibreux étant séparé en deux groupes, chaque groupe circulant séparément sur deux embarrages et les deux groupes étant réunis sur le troisième embarrage. Cependant, de par la configuration des embarrages, les deux groupes de mèches ne présentent pas le même temps de séjour dans la cuve et ne peuvent donc être imprégnées de la même manière.

La fabrication de ces bandes (tapes) ou nappes de mèches de fibres imprégnées nécessite de conserver l'unidirectionnalité des fibres dans le matériau final pour obtenir les meilleures performances notamment mécaniques du matériau ; et donc d'éviter le désaxage des fibres de renfort notamment pendant ou après l'étape d'imprégnation par la poudre sèche. Or, l'écart intermèche nécessaire lors de cette étape d'imprégnation par la poudre sèche, pour ne pas trop perturber la fluidisation de la poudre, impose de rapprocher jusqu'à contact les différentes mèches de fibres imprégnées pour former la nappe. Dans le cas de l'utilisation d'un lit fluide, ce rapprochement peut avoir lieu pendant l'étape d'imprégnation par la poudre, juste après cette étape, ou en sortie de la cuve contenant le lit fluidisé, ou encore après l'étape de fusion de la poudre et l'imprégnation des fibres par la résine fondue. Dans la plupart des cas il sera nécessaire de dévier les axes de défilement des mèches de fibres pour les forcer à se rapprocher, ce d'autant plus que l'écart intermèche dans la cuve aura été important. En faisant ainsi, on oriente les fibres avec un angle particulier différent de l'angle 0 correspondant à leur orientation initiale calquée sur leur axe de défilement dans le procédé d'imprégnation. Un désaxage des fibres dans le plan (horizontal) et/ou hors du plan (vertical) de la nappe de mèches de fibres peut résulter de cet angle induit, ce désaxage se figeant lors du refroidissement de la résine thermoplastique et ne pouvant plus être corrigé par la suite.

L'invention a donc pour but de remédier à au moins un des inconvénients de l'art antérieur.

L'invention vise notamment à proposer une méthode de fabrication innovante d'un grand nombre de mèches imprégnées individuellement en parallèle, comportant le même taux de poudre sèche, tout en conservant une installation dont la largeur est proche de la largeur de l'ensemble des mèches imprégnées par la poudre. De préférence cette imprégnation sera homogène c'est-à-dire que la poudre sera régulièrement répartie sur toute la largeur de chacune desdites mèches. De façon préférée, l'assemblage aura lieu après l'étape d'imprégnation. De façon encore plus préférée, qu'il s'agisse de fabrication en parallèle de rubans à partir d'une ou plusieurs mèches ou de la fabrication d'une nappe de mèches, le dispositif d'imprégnation en parallèle des mèches par la poudre permettra de conserver le parallélisme de l'axe de symétrie des mèches imprégnées par la poudre. De manière encore optimisée ces mèches de fibres sont imprégnées en utilisant un procédé d'imprégnation dans une cuve comprenant un polymère thermoplastique sous forme de poudre, notamment en lit fluidisé, dont les dimensions sont minimales et permettant malgré tout une imprégnation homogène de la mèche et en particulier sans perturbation d'une mèche de fibres donnée sur ses plus proches voisines. De manière encore plus optimisée, les fibres de renfort seront imprégnées de polymère thermoplastique à coeur et avec un taux de porosité faible et contrôlé, cette imprégnation à coeur des mèches de fibres ayant lieu après la phase de fusion de la poudre mais nécessitant au préalable une imprégnation homogène des mèches par la poudre.

A cet effet, l'invention a pour objet un procédé de fabrication d'un matériau fibreux pré-imprégné comprenant une étape de pré-imprégnation de mèches de fibres de renfort parallèles, lesdites mèches étant divisées en deux ou plusieurs groupes de mèches de fibres qui constitueront les rubans ou la nappe finale, chaque groupe de mèches défilant de manière séparée et interpénétrée sur un système de deux ou plusieurs séries d'embarrages dans la cuve comprenant un polymère thermoplastique sous forme de poudre, notamment en lit fluidisé.

L'invention concerne donc un procédé de fabrication d'un matériau fibreux pré-imprégné comprenant un matériau fibreux en fibres continues et au moins une matrice polymère thermoplastique, caractérisé en ce que ledit matériau fibreux pré-imprégné est réalisé en une pluralité de rubans ou nappes parallèles unidirectionnels et en ce que ledit procédé comprend une étape de pré-imprégnation, en particulier homogène, dudit matériau fibreux se présentant sous forme de N mèches parallèles (20) par ladite au moins une matrice polymère thermoplastique se présentant sous forme de poudre dans au moins une cuve (10), ladite étape de pré-imprégnation étant effectuée par voie sèche dans ladite au moins une cuve (10),
lesdites N mèches parallèles (20) étant divisées en X groupes constitués de Nᵢ mèches parallèles dans le sens de défilement des mèches, ΣNᵢ = N et X ≤ N, chaque groupe de mèches parallèles défilant de manière séparée au moyen de X séries constituées de Y pièces d'embarrage (30) dans la au moins une cuve, avec Y≥3, et dont l'une au moins desdites Y pièces d'embarrage (30) de chaque série est au moins partiellement immergée dans ladite poudre, chaque groupe de mèches défilant sur le même nombre Y de pièces d'embarrage (30),
lesdites mèches parallèles étant séparées les unes des autres dans ladite au moins une cuve avec un écartement au moins égal à la largeur de chaque mèche, au moins au niveau de ladite pièce d'embarrage au moins partiellement immergée,
lesdites Y pièces d'embarrages (30) de chaque série dans ladite au moins une cuve étant décalées dans le sens de défilement des mèches d'une distance au moins supérieure à l'épaisseur de chaque mèche,
le contrôle du taux de ladite au moins une matrice polymère thermoplastique dans ledit matériau fibreux étant effectué par contrôle du temps de séjour desdites N mèches dans la poudre,
le temps de séjour dans la poudre étant identique pour chacune desdites mèches,
lesdites N mèches étant optionnellement réunies hors de la poudre.

Avantageusement, le diamètre moyen D50 en volume des particules de poudre de polymère thermoplastique est compris de 30 à 300 µm, notamment de 50 à 200 µm, plus particulièrement de 70 à 200µm.

Le terme « largeur » utilisé dans les expressions « largeur de cuve » ou « largeur de ligne » désigne la dimension de l'élément considéré (ici la cuve dans le premier cas et la ligne dans le second cas) mesurée dans le plan horizontal et dans le sens transverse au sens de défilement de la mèche dans le procédé.

L'expression « mèches parallèles » signifie que les axes de symétrie des mèches sont parallèles entre eux.

L'expression « temps de séjour dans la poudre » signifie le temps durant lequel la mèche est en contact avec ladite poudre dans ladite au moins une cuve (10).

L'expression « par voie sèche » signifie que ladite au moins une matrice polymère thermoplastique est sous forme de poudre dans ladite au moins une cuve et donc dépourvue d'eau ou d'un solvant dans lequel elle serait en suspension ou dispersion ou émulsion, mis à part le taux d'humidité naturellement présent dans ladite poudre thermoplastique.

Seul de l'air ou un gaz neutre peuvent être présents dans ladite au moins une cuve.

Le terme « homogène » signifie que l'imprégnation est uniforme sur la largeur des mèches.

Dans la présente description, on entend par « matériau fibreux » un assemblage de fibres de renfort. Avant sa mise en forme, il se présente sous forme de mèches. Après sa mise en forme, il se présente sous forme de bandes (ou tapes) composées d'une ou plusieurs mèches ou de rubans ou de nappes obtenues par assemblage d'un grand nombre de mèches, c'est-à-dire supérieur à 9 mèches.

Dans un mode de réalisation, le procédé selon l'invention est à l'exclusion de tout procédé électrostatique en charge volontaire.

Lorsque l'étape de pré-imprégnation est effectuée au moyen de plusieurs cuves, deux configurations sont possibles :

Les cuves sont situées dans l'alignement longitudinal des mèches ou bien les cuves sont superposées.

Dans un mode de réalisation, ladite au moins une cuve (10) correspond à au moins un lit fluidisé (11).

Dans un mode de réalisation avantageux, l'étape de pré-imprégnation est effectuée au moyen d'une seule cuve (10).

Dans un mode de réalisation avantageux, l'étape de pré-imprégnation est effectuée au moyen d'une seule cuve (10) comprenant un lit fluidisé (11).

Dans un autre mode de réalisation, ladite étape de pré-imprégnation est effectuée dans une cuve par pulvérisation par pistolet.

Les Inventeurs ont donc trouvé de manière inattendue que la division des mèches en plusieurs groupes de mèches parallèles individualisées, chaque groupe de mèches parallèles individualisées défilant sur un système de séries d'embarrages, le nombre de séries d'embarrage correspondant au nombre de groupe de mèche, un seul groupe défilant sur une seule série d'embarrage et les différents groupes étant interpénétrés entre eux, tout en contrôlant le temps de séjour, permettait une pré-imprégnation homogène et permettait dans une deuxième étape après la fusion de la poudre, d'obtenir des mèches imprégnées à coeur avec un taux de porosité faible et contrôlé dans chaque mèche sans nécessité d'augmenter la largeur de la cuve comprenant la poudre d'imprégnation.

En d'autres termes, les Inventeurs ont trouvé que la division des mèches en plusieurs groupes de mèches parallèles, tout en générant un espace suffisant entre chaque mèche de fibres appartenant à un groupe donné, les différents groupes étant interpénétrés entre eux, permettait de ne pas perturber la fluidisation de la poudre et donc d'assurer à chacune des mèches de ne pas subir l'influence de ses plus proches voisines, tout en contrôlant le temps de séjour dans la poudre de chaque mèche et donc permettre que le taux de poudre soit constant d'une mèche à l'autre.

L'utilisation de ce système permet notamment :
De générer un espace suffisant entre chaque mèche de fibres appartenant à un groupe donné pour ne pas perturber la fluidisation de ces mèches et sans subir l'influence de ses plus proches voisines,
De ne pas surdimensionner la cuve de fluidisation, notamment en largeur, et donc d'optimiser la largeur globale de la ligne d'imprégnation,
De mieux réguler la fluidisation dans toute la cuve de fluidisation (meilleure homogénéité locale du flux à tout endroit de la cuve) permettant d'obtenir un niveau d'imprégnation constant et homogène pour chaque mèche et donc une nappe uniformément imprégnée.

Ces systèmes permettent aussi avantageusement d'obtenir des rubans ou une nappe de mèches de fibres proches les unes des autres sans avoir à les dévier de leur axe de défilement, les mèches de fibres s'interpénétrant sans se toucher après le dernier point de contact d'embarrage de cuve.

### Matrice polymère

On entend par thermoplastique, ou polymère thermoplastique, un matériau généralement solide à température ambiante, pouvant être semi-cristallin ou amorphe, et qui se ramollit lors d'une augmentation de température, en particulier après passage de sa température de transition vitreuse (Tg) et s'écoule à plus haute température lorsqu'il est amorphe, ou pouvant présenter une fusion franche au passage de sa température dite de fusion (Tf) lorsqu'il est semi-cristallin, et qui redevient solide lors d'une diminution de température en dessous de sa température de cristallisation (pour un semi-cristallin) et en dessous de sa température de transition vitreuse (pour un amorphe).

La Tg et la Tf sont déterminées par analyse calorimétrique différentielle (DSC) selon la norme 11357-2 :2013 et 11357-3 :2013 respectivement.

Concernant le polymère de constitution de la matrice d'imprégnation du matériau fibreux, c'est avantageusement un polymère thermoplastique ou un mélange de polymères thermoplastiques. Ce polymère ou mélange de polymères thermoplastiques est broyé sous forme de poudre, afin de pouvoir l'utiliser dans un dispositif tel qu'une cuve, notamment en lit fluidisé.

Le dispositif sous forme de cuve, notamment en lit fluidisé peut être ouvert ou fermé.

De manière facultative, le polymère thermoplastique ou mélange de polymères thermoplastiques comprend en outre des charges carbonées, en particulier du noir de carbone ou des nanocharges carbonées, de préférence choisies parmi des nanocharges carbonées, en particulier des graphènes et/ou des nanotubes de carbone et/ou des nanofibrilles de carbone ou leurs mélanges. Ces charges permettent de conduire l'électricité et la chaleur, et permettent par conséquent d'améliorer la lubrification de la matrice polymère lorsqu'elle est chauffée.

Optionnellement, ledit polymère thermoplastique comprend au moins un additif, notamment choisi parmi un catalyseur, un antioxydant, un stabilisant thermique, un stabilisant UV, un stabilisant à la lumière, un lubrifiant, une charge, un plastifiant, un agent ignifugeant, un agent nucléant, un allongeur de chaîne et un colorant ou un mélange de ceux-ci.

Selon une autre variante, le polymère thermoplastique ou mélange de polymères thermoplastiques peut en outre comprendre des polymères à cristaux liquides ou du poly(butylène téréphtalate) cyclisé, ou des mélanges en contenant, comme la résine CBT100 commercialisée par la société CYCLICS CORPORATION. Ces composés permettent notamment de fluidifier la matrice polymère à l'état fondu, pour une meilleure pénétration au coeur des fibres. Selon la nature du polymère, ou mélange de polymères thermoplastiques, utilisé pour réaliser la matrice d'imprégnation, notamment sa température de fusion, on choisira l'un ou l'autre de ces composés.

Les polymères thermoplastiques entrant dans la constitution de la matrice d'imprégnation du matériau fibreux, peuvent être choisis parmi :
- les polymères et copolymères de la famille des polyamides (PA) aliphatiques, cycloaliphatiques ou des PA semi-aromatiques (encore dénommés polyphtalamides (PPA)),
- les polyurées, en particulier aromatiques,
- les polymères et copolymères de la famille des acryliques comme les polyacrylates, et plus particulièrement le polyméthacrylate de méthyle (PMMA) ou ses dérivés
- les polymères et copolymères de la famille des polyaryléther cétones (PAEK) comme le poly(éther éther cétone) (PEEK), ou les polyaryléther cétones cétones (PAEKK) comme le poly(éther cétone cétone) (PEKK) ou leurs dérivés,
- les polyéther-imides (PEI) aromatiques,
- les polyarylsulfures, en particulier les polyphénylène sulfures (PPS),
- les polyarylsulfones, en particulier les polyphénylène sulfones (PPSU),
- les polyoléfines, en particulier le polypropylène (PP);
- l'acide polylactique (PLA),
- l'alcool polyvinylique (PVA),
- les polymères fluorés, en particulier le poly(fluorure de vinylidène) (PVDF), ou le polytétrafluoroéthylène (PTFE) ou le polychlorotrifluoroéthylène (PCTFE),
et leurs mélanges.

Avantageusement, lorsque ledit polymère thermoplastique est en mélange, il est additionné dans la cuve sous forme de poudre obtenue au préalable par « dry blend » ou compound ou directement dans la cuve sous forme de « dry blend ».

Avantageusement, il est additionné sous forme de poudre obtenue au préalable par « dry blend » ou directement dans la cuve sous forme de « dry blend » et le mélange est un mélange de PEKK et de PEI.

Avantageusement, lorsque ledit polymère est un mélange de deux polymères P1 et P2, la proportion en poids de polymère P1 et P2 est comprise de 1-99% à 99-1%.

Avantageusement, le mélange PEKK/PEI est compris de 90-10% à 60-40% en poids, en particulier de 90-10% à 70-30% en poids.

Le polymère thermoplastique peut correspondre au polymère final non réactif qui imprégnera le matériau fibreux ou à un prépolymère réactif, qui imprégnera également le matériau fibreux, mais est susceptible de réagir sur lui-même ou avec un autre prépolymère, en fonction des fins de chaîne portées par ledit prépolymère, après imprégnation, ou encore avec un allongeur de chaîne et notamment lors d'un chauffage au niveau d'une calandre chauffante.

Selon une première possibilité, ledit prépolymère peut comprendre ou être constituée de, au moins un prépolymère (polyamide) réactif porteur sur la même chaîne (c'est-à-dire sur le même prépolymère), de deux fonctions terminales X' et Y' fonctions respectivement coréactives entre elles par condensation, plus particulièrement avec X' et Y' étant amine et carboxy ou carboxy et amine respectivement. Selon une deuxième possibilité, ledit prépolymère peut comprendre ou être constituée de, au moins deux prépolymères polyamides réactifs entre eux et porteurs chacun respectivement de deux fonctions terminales X' ou Y', identiques (identiques pour même prépolymère et différentes entre les deux prépolymères), ladite fonction X' d'un prépolymère pouvant réagir seulement avec ladite fonction Y' de l'autre prépolymère, en particulier par condensation, plus particulièrement avec X' et Y' étant amine et carboxy ou carboxy et amine respectivement.

Selon une troisième possibilité, ledit prépolymère peut comprendre ou être constituée de, au moins un prépolymère dudit polymère polyamide thermoplastique, porteur de n fonctions réactives terminales X, choisies parmi : - NH2, -CO2H et -OH, de préférence NH2 et -CO2H avec n étant 1 à 3, de préférence de 1 à 2, plus préférentiellement 1 ou 2, plus particulièrement 2 et au moins un allongeur de chaîne Y-A'-Y, avec A' étant un biradical hydrocarboné, de structure non polymère, porteur de 2 fonctions réactives terminales Y identiques, réactives par polyaddition avec au moins une fonction X dudit prépolymère a1), de préférence de masse moléculaire inférieure à 500, plus préférentiellement inférieure à 400.

La masse moléculaire moyenne en nombre Mn dudit polymère final de la matrice thermoplastique est de préférence dans une plage allant de 10000 à 40000, de préférence de 12000 à 30000. Ces valeurs Mn peuvent correspondre à des viscosités inhérentes supérieures ou égales à 0,8 telle que déterminées dans le m-crésol selon la norme ISO 307:2007 mais en changeant le solvant (utilisation du m-crésol à la place de l'acide sulfurique et la température étant de 20°C).

Lesdits prépolymères réactifs selon les deux options citées plus haut, ont une masse moléculaire moyenne en nombre Mn allant de 500 à 10000, de préférence de 1000 à 6000, en particulier de 2500 à 6000.

Les Mn sont déterminées en particulier par le calcul à partir du taux des fonctions terminales déterminé par titration potentiométrique en solution et la fonctionnalité desdits prépolymères. Les masses Mn peuvent également être déterminées par chromatographie d'exclusion stérique ou par RMN.

La nomenclature utilisée pour définir les polyamides est décrite dans la norme ISO 1874-1:2011 "Plastiques - Matériaux polyamides (PA) pour moulage et extrusion - Partie 1 : Désignation", notamment en page 3 (tableaux 1 et 2) et est bien connue de l'homme du métier.

Le polyamide peut être un homopolyamide ou un copolyamide ou un mélange de ceux-ci.

Avantageusement, les polymères de constitution de la matrice sont choisis parmi les Polyamides (PA), en particulier choisis parmi les polyamides aliphatiques, notamment le PA11 et le PA12, les polyamides cycloaliphatiques, et les polyamides semi-aromatiques (polyphthalamides) éventuellement modifiés par des motifs urées, et leur copolymères, le Polyméthacrylate de méthyle (PPMA) et ses copolymères, les Polyether imides (PEI), le Poly(sulfure de phénylène) (PPS), le Poly(sulfone de phénylène) (PPSU), le Polyethercétonecétone (PEKK), le Polyetherethercétone (PEEK), les polymères fluorés comme le poly(fluorure de vinylidène) (PVDF).

Pour les polymères fluorés, on peut utiliser un homopolymère du fluorure de vinylidène (VDF de formule CH₂=CF₂) ou un copolymère du VDF comprenant en poids au moins 50% en masse de VDF et au moins un autre monomère copolymérisable avec le VDF. La teneur en VDF doit être supérieure à 80% en masse, voire mieux 90% en masse, pour assurer une bonne résistance mécanique à la pièce de structure, surtout lorsqu'elle est soumise à des contraintes thermiques et chimiques. Le comonomère peut être un monomère fluoré tel que par exemple le fluorure de vinyle.

Pour des pièces de structure devant résister à des températures élevées, outre les polymères fluorés, on utilise avantageusement selon l'invention les PAEK (PolyArylEtherKetone) tels que les polyéther cétones PEK, le poly(éther éther cétone) PEEK, le poly(éther cétone cétone) PEKK, le Poly(éther cétone éther cétone cétone) PEKEKK ou les PA de haute température de transition vitreuse Tg).

Avantageusement, ledit polymère thermoplastique est un polymère dont la température de transition vitreuse est telle que Tg≥ 80°C ou un polymère semi-cristallin dont la température de fusion Tf ≥ 150°C.

Avantageusement, ledit polymère thermoplastique est :
- un polyamide aliphatique choisi parmi le polyamide 6 (PA-6), le polyamide 11 (PA-11), le polyamide 12 (PA-12), le polyamide 66 (PA-66), le polyamide 46 (PA-46), le polyamide 610 (PA-610), le polyamide 612 (PA-612), le polyamide 1010 (PA-1010), le polyamide 1012 (PA-1012), ou un mélange de ceux-ci ou un copolyamide de ceux-ci,

un polyamide semi-aromatique, éventuellement modifié par des unités urées, notamment un polyamide semi-aromatique de formule X/YAr, tel que décrits dans EP1505099, notamment un polyamide semi-aromatique de formule A/XT dans laquelle A est choisi parmi un motif obtenu à partir d'un aminoacide, un motif obtenu à partir d'un lactame et un motif répondant à la formule (diamine en Ca).(diacide en Cb), avec a représentant le nombre d'atomes de carbone de la diamine et b représentant le nombre d'atome de carbone du diacide, a et b étant chacun compris entre 4 et 36, avantageusement entre 9 et 18, le motif (diamine en Ca) étant choisi parmi les diamines aliphatiques, linéaires ou ramifiés, les diamines cycloaliphatiques et les diamines alkylaromatiques et le motif (diacide en Cb) étant choisi parmi les diacides aliphatiques, linéaires ou ramifiés, les diacides cycloaliphatiques et les diacides aromatiques.;
X.T désigne un motif obtenu à partir de la polycondensation d'une diamine en Cx et de l'acide téréphtalique, avec x représentant le nombre d'atomes de carbone de la diamine en Cx, x étant compris entre 6 et 36, avantageusement entre 9 et 18,notamment un polyamide de formule A/6T, A/9T, A/10T ou A/11T, A étant tel que défini ci-dessus, en particulier un polyamide PA 6/6T, un PA 66/6T, un PA 6I/6T, un PA MPMDT/6T, un PA MXDT/6T, un PA PA11/10T, un PA 11/6T/10T, un PA MXDT/10T, un PA MPMDT/10T, un PA BACT/10T, un PA BACT/6T, PA BACT/10T/6T, un PA 11/BACT/10T, un PA 11/MPMDT/10T et un PA 11/MXDT/10T, et les copolymères blocs, notamment polyamide/polyéther (PEBA).

T correspond à l'acide téréphtalique, MXD correspond à la m-xylylène diamine, MPMD correspond à la méthylpentaméthylène diamine et BAC correspond au bis(aminométhyl)cyclohexane.

### Matériau fibreux :

Concernant les fibres de constitution dudit matériau fibreux, ce sont notamment des fibres d'origine minérale, organique ou végétale. Parmi les fibres d'origine minérale, on peut citer les fibres de carbone, les fibres de verre, les fibres de basalte, les fibres de silice, ou les fibres de carbure de silicium par exemple. Parmi les fibres d'origine organique, on peut citer les fibres à base de polymère thermoplastique ou thermodurcissable, telles que des fibres de polyamides semi-aromatiques, des fibres d'aramide ou des fibres en polyoléfines par exemple. De préférence, elles sont à base de polymère thermoplastique amorphe et présentent une température de transition vitreuse Tg supérieure à la Tg du polymère ou mélange de polymère thermoplastique de constitution de la matrice d'imprégnation lorsque ce dernier est amorphe, ou supérieure à la Tf du polymère ou mélange de polymère thermoplastique de constitution de la matrice d'imprégnation lorsque ce dernier est semi-cristallin. Avantageusement, elles sont à base de polymère thermoplastique semi-cristallin et présentent une température de fusion Tf supérieure à la Tg du polymère ou mélange de polymère thermoplastique de constitution de la matrice d'imprégnation lorsque ce dernier est amorphe, ou supérieure à la Tf du polymère ou mélange de polymère thermoplastique de constitution de la matrice d'imprégnation lorsque ce dernier est semi-cristallin. Ainsi, il n'y a aucun risque de fusion pour les fibres organiques de constitution du matériau fibreux lors de l'imprégnation par la matrice thermoplastique du composite final. Parmi les fibres d'origine végétale, on peut citer les fibres naturelles à base de lin, de chanvre, de lignine, de bambou, de soie notamment d'araignée, de sisal, et d'autres fibres cellulosiques, en particulier de viscose. Ces fibres d'origine végétale peuvent être utilisées pures, traitées ou bien enduites d'une couche d'enduction, en vue de faciliter l'adhérence et l'imprégnation de la matrice de polymère thermoplastique.

Le matériau fibreux peut également être un tissu, tressé ou tissé avec des fibres.

Il peut également correspondre à des fibres avec des fils de maintien.

Ces fibres de constitution peuvent être utilisées seules ou en mélanges. Ainsi, des fibres organiques peuvent être mélangées aux fibres minérales pour être imprégnée de polymère thermoplastique et former le matériau fibreux pré-imprégné.

Les mèches de fibres organiques peuvent avoir plusieurs grammages. Elles peuvent en outre présenter plusieurs géométries. Les fibres peuvent se présenter sous forme de fibres courtes, qui composent alors les feutres ou les non tissés pouvant se présenter sous la forme de bandes, nappes, ou morceaux, ou sous forme de fibres continues, qui composent les tissus 2D, les tresses ou mèches de fibres unidirectionnelles (UD) ou non tissées. Les fibres de constitution du matériau fibreux peuvent en outre se présenter sous forme d'un mélange de ces fibres de renfort de différentes géométries. De préférence, les fibres sont continues.

De préférence le matériau fibreux est constitué par des fibres continues de carbone, de verre ou de carbure de silicium ou leur mélange, en particulier des fibres de carbone. Il est utilisé sous forme d'une mèche ou de plusieurs mèches.

Dans les matériaux pré-imprégnés aussi appelés « prêts à l'emploi », le polymère ou mélange de polymères thermoplastiques d'imprégnation est réparti uniformément et de manière homogène autour des fibres. Dans ce type de matériau, le polymère thermoplastique d'imprégnation doit être réparti de manière la plus homogène possible au sein des fibres afin d'obtenir un minimum de porosités, c'est à dire un minimum de vides entre les fibres. En effet, la présence de porosités dans ce type de matériaux peut agir comme des points de concentrations de contraintes, lors d'une mise sous contrainte mécanique de traction par exemple, et qui forment alors des points d'initiation de rupture du matériau fibreux pré-imprégné et le fragilisent mécaniquement. Une répartition homogène du polymère ou mélange de polymères améliore donc la tenue mécanique et l'homogénéité du matériau composite formé à partir de ces matériaux fibreux pré-imprégnés.

Ainsi, dans le cas de matériaux pré-imprégnés dits « prêts à l'emploi », le taux de fibres dans ledit matériau fibreux imprégné est compris de 45 à 65 % en volume, de préférence de 50 à 60% en volume, notamment de 54 à 60% en volume.

La mesure du taux d'imprégnation peut être réalisée par analyse d'image (utilisation de microscope ou d'appareil photo ou de caméra numérique, notamment), d'une coupe transversale du ruban, en divisant la surface du ruban imprégnée par le polymère par la surface totale du produit (surface imprégnée plus surface des porosités). Afin d'obtenir une image de bonne qualité il est préférable d'enrober le ruban découpé dans son sens transversal dans une résine de polissage standard et de polir avec un protocole standard permettant l'observation de l'échantillon au microscope grossissement fois 6 au minimum.

Avantageusement, le taux de porosité dudit matériau fibreux pré-imprégné est compris de 0% et 30%, notamment de 1% à 10%, en particulier de 1% à 5%.

Le taux de porosité correspond au taux de porosité fermée et peut être déterminé soit par microscopie électronique, soit comme étant l'écart relatif entre la densité théorique et la densité expérimentale dudit matériau fibreux pré-imprégné tel que décrit dans la partie exemples de la présente invention.

### Etape d'imprégnation :

Lors de l'étape de pré-imprégnation dans ladite au moins un cuve, en particulier, lesdites N mèches parallèles (20) sont divisées en X groupes constitués de Nᵢ mèches parallèles dans le sens de défilement des mèches, ΣNᵢ = N et X ≤ N, chaque groupe de mèches parallèles défilant de manière séparée au moyen de X séries constituées de Y pièces d'embarrage (30) dans ladite au moins une cuve, avec Y≥3.

Il est bien évident que le nombre de cuves dépend du nombre de mèches à pré-imprégner.

La pluralité de cuves peut être organisée dans le sens du défilement des dites mèches et donc dans le sens de la longueur. La pluralité de cuves peut également être organisée par superposition des cuves et donc dans le sens de la hauteur.

Quel que soit le nombre de cuves présentes et quelle que soit l'organisation de la pluralité des cuves, chaque mèche présente un temps de séjour identique dans la poudre.

Lorsque plusieurs cuves sont présentes, chaque cuve présente le même système de X séries constituées de Y pièces d'embarrage (30) dans ladite cuve, avec Y≥3.

Lesdites N mèches parallèles (20) sont donc divisées ou séparées en minimum X=2 groupes et défilent sur minimum X=2 séries d'embarrages, chaque série d'embarrage étant constituées au minimum de 3 embarrages.

Avantageusement, le nombre de pièces d'embarrage est compris de 3 à 20, plus préférentiellement de 3 à 10, encore plus préférentiellement de 3 à 6.

Avantageusement, le nombre de pièces d'embarrage est compris de 3 ((31), (32) et (33)).

Il existe donc Y pièces d'embarrage par série dans la cuve, Y étant compris de 3 à 20.

Avantageusement, X est compris de 2 à 200, préférentiellement de 2 à 50, plus préférentiellement de 2 à 10, plus préférentiellement de 2 à 5, plus préférentiellement égal à 2.

Il existe donc dans la ou les cuves X séries de pièces d'embarrage, X étant compris avantageusement de 2 à 200, préférentiellement de 2 à 50, plus préférentiellement de 2 à 10, plus préférentiellement de 2 à 5, plus préférentiellement égal à 2.

Avantageusement, le nombre d'embarrages est compris de 3 à 20, plus préférentiellement de 3 à 10, encore plus préférentiellement de 3 à 6 et X est compris de 2 à 200, préférentiellement de 2 à 50, plus préférentiellement de 2 à 10, plus préférentiellement de 2 à 5, plus préférentiellement égal à 2.

Avantageusement, le nombre d'embarrages est compris de 3 à 6 et X est compris de 2 à 10, plus préférentiellement de 2 à 5, plus préférentiellement égal à 2.

Avantageusement, le nombre d'embarrages est compris de 3 à 6 et X est compris de de 2 à 5, plus préférentiellement égal à 2.

Avantageusement, une seule cuve est présente.

Avantageusement, la cuve comprend un lit fluidisé.

Avantageusement, chaque pièce d'embarrage, Yₘ, de chaque série dans le lit fluide est situé à la même hauteur par rapport au fond de la cuve.

Avantageusement, les Y pièces d'embarrage de chaque série dans le lit fluide sont équidistantes chacune les unes des autres.

Avantageusement, lesdites Y pièces d'embarrage sont des rouleaux de compression de forme convexe, concave ou cylindrique, en particulier de forme cylindrique.

Lesdites mèches (20) sont donc divisées ou séparées en X groupes. La cuve comprend donc X séries de pièces d'embarrage et chaque groupe de mèches défile sur la Xₙ série de pièces d'embarrage.

Lesdites mèches (20) de chaque groupe X pénètrent dans le lit fluidisé et défilent sur au moins une desdites Y pièces d'embarrage de chaque série au moins partiellement immergée dans la poudre, avec un angle α₂ formé entre la mèche et la normale de ladite pièce d'embarrage Yₘ compris de 0 à 89°, préférentiellement 5° à 85°, préférentiellement de 5° à 45°, préférentiellement de 5° à 30°.

Ladite pièce d'embarrage est au moins partiellement immergée dans la poudre de manière à ce que la poudre puisse pénétrer entre la mèche et la pièce d'embarrage sur laquelle elle défile. Avantageusement, ladite pièce d'embarrage de chaque série est totalement immergée.

Avantageusement, les angles α₂ de chaque groupe de mèches formés entre la mèche et la normale de ladite pièce d'embarrage Yₘ au moins partiellement immergée dans la poudre sont identiques.

Après être passée sur ladite au moins une desdites Y pièces d'embarrage de chaque série au moins partiellement immergée dans ladite poudre, chaque mèche (20) ressort dudit lit fluidisé avec un angle β₂ formé entre la mèche et la normale dudit embarrage Yₘ compris de 0 à 89°, préférentiellement 5° à 85°, préférentiellement de 5° à 45°, préférentiellement de 5° à 30°.

Avantageusement, les angles β₂ de chaque groupe de mèches formés entre la mèche et la normale de ladite pièce d'embarrage Yₘ au moins partiellement immergée dans la poudre sont identiques.

Avantageusement, les angles α₂ de chaque groupe de mèches formés entre la mèche et la normale de ladite pièce d'embarrage Yₘ au moins partiellement immergée dans la poudre sont identiques et les angles β₂ de chaque groupe de mèches formés entre la mèche et la normale de ladite pièce d'embarrage Yₘ au moins partiellement immergée dans la poudre sont identiques.

Avantageusement, α₂ = β₂.

Dans un mode de réalisation, le temps de séjour dans la poudre est compris de 0,01s à 10s, préférentiellement de 0,1s à 5s, et en particulier de 0,1s à 3s.

Le temps de séjour du matériau fibreux dans la poudre est l'un des facteurs essentiels à l'imprégnation, notamment homogène, dudit matériau fibreux.

En deçà de 0,1s, l'imprégnation n'est pas bonne.

Au-delà de 10s, le taux de matrice polymère imprégnant le matériau fibreux est trop important et les propriétés mécaniques du matériau fibreux pré-imprégné seront mauvaises.

Dans un mode de réalisation, ladite étape de pré-imprégnation est effectuée avec épanouissement de chaque Nᵢ mèches parallèles entre l'entrée et la sortie de la cuve comprenant ledit lit fluidisé.

Il est bien évident que dans le cas d'un épanouissement, les axes de symétrie des mèches restent parallèles entre eux.

L'expression « entrée du lit fluidisé » correspond à la tangente verticale du bord de la cuve qui comprend le lit fluidisé.

L'expression « sortie du lit fluidisé » correspond à la tangente verticale de l'autre bord de la cuve qui comprend le lit fluidisé.

L'épanouissement consiste à singulariser au maximum chaque filament constitutif de ladite mèche des autres filaments qui l'entourent dans son plus proche espace. Il correspond à l'étalement transverse de la mèche.

En d'autres termes, l'étalement transverse ou la largeur de la mèche augmente entre l'entrée de la cuve comprenant le lit fluidisé et la sortie de la cuve comprenant le lit fluidisé) et permet ainsi une imprégnation homogène.

Avantageusement, le pourcentage d'épanouissement de ladite mèche ou desdites mèches entre l'entrée et la sortie dudit lit fluidisé est compris de 1% à 400%, préférentiellement entre 30% et 400% préférentiellement entre 30% et 150%, préférentiellement entre 50% et 150%.

L'épanouissement est fonction du matériau fibreux utilisé. Par exemple, l'épanouissement d'un matériau en fibre de carbone est beaucoup plus important que celui d'une fibre de lin.

L'épanouissement est aussi fonction du nombre de fibres ou filaments dans la mèche, de leur diamètre moyen et de leur cohésion de par l'ensimage.

Avantageusement, ledit épanouissement de chaque Nᵢ mèches parallèles est effectué au moins au niveau d'une des pièces d'embarrage Yₘ (30), en particulier au moins au niveau de ladite au moins une desdites Yₘ pièces d'embarrage de chaque série au moins partiellement immergée dans ladite poudre.

Avantageusement, ledit épanouissement est obtenu avec un rouleau de compression de forme cylindrique.

Avantageusement, lesdites pièces d'embarrage Yₘ de chaque série sont identiques.

Plusieurs pièces d'embarrages peuvent être présentes dans la cuve en dehors du lit fluidisé avant ladite au moins une pièce d'embarrage au moins partiellement immergée.

De la même manière, plusieurs pièces d'embarrages peuvent être présentes dans la cuve en dehors du lit fluidisé après ladite au moins une pièce d'embarrage au moins partiellement immergée.

Dans un mode de réalisation, le nombre m de pièces d'embarrage pour chaque série est de trois et une première pièce d'embarrage Y₁ (31) pour chaque série étant située au-dessus dudit lit fluidisé après l'entrée de la cuve (10) et une dernière pièce d'embarrage Y₃ pour chaque série (33) sont situées au-dessus dudit lit fluidisé avant la sortie de la cuve (10), ladite pièce au moins partiellement immergée (32) étant située entre la première pièce d'embarrage Y₁ (31) et ladite dernière pièce d'embarrage Y₃ pour chaque série (33).

Chaque groupe de mèches défile sur une première pièce d'embarrage Y₁ juste après l'entrée de la cuve et descend ensuite vers la poudre en formant un angle α₁.

On ne sortirait pas du cadre de l'invention si la première pièce d'embarrage Y₁ correspondait respectivement au bord de l'entrée de cuve.

Avantageusement, la première pièce d'embarrage Y₁ est distincte du bord d'entrée de cuve.

Lesdites mèches juste avant de pénétrer dans la cuve peuvent être séparées l'une de l'autre ou bord à bord mais dans ce dernier cas, elles sont alors séparées sur la largeur de la première pièce d'embarrage Y₁, située à l'entrée de la cuve, et sur chaque pièce d'embarrage ultérieure, d'une distance telle que les mèches ne se touchent pas lorsque l'épanouissement de chaque mèche est maximum.

Avantageusement, la distance séparant deux mèches d'une même série est au moins égale à une demi-largeur de mèche épanouie, en particulier une largeur de mèche épanouie.

Dans un mode de réalisation, l'angle α₁ formé entre la mèche et la normale de ladite pièce d'embarrage Y₁ compris de 0 à 89°, préférentiellement 5° à 85°, préférentiellement de 5° à 45°, préférentiellement de 5° à 30°.

Pour chaque série, il existe une première pièce d'embarrage Y₁ et pour chaque groupe, l'angle α₁ formé entre la mèche et la normale de ladite pièce d'embarrage Y₁ est compris de 0 à 89°, préférentiellement 5° à 85°, préférentiellement de 5° à 45°, préférentiellement de 5° à 30°.

Avantageusement, toutes les pièces d'embarrage Y₁ sont situées à la même hauteur par rapport au fond de la cuve et sont décalées l'une par rapport à l'autre d'au moins l'épaisseur d'une mèche, en particulier de 5mm à 100mm, notamment de 10mm à 50mm.

Avantageusement, toutes les pièces d'embarrage Y₁ sont équidistantes l'une de l'autre.

Avantageusement, les angles α₁ formés entre la mèche et la normale de ladite pièce d'embarrage Y₁ de chaque série ou groupe sont identiques.

Lesdites mèches (20) de chaque groupe pénètrent ensuite dans la poudre notamment dans le lit fluidisé, compris dans la cuve, jusqu'à une seconde pièce d'embarrage Y₂ de chaque série Xₙ.

Ladite seconde pièce d'embarrage Y₂ de chaque série est au moins partiellement immergée dans la poudre, en particulier dans le lit fluidisé de manière à ce que la poudre puisse pénétrer entre la mèche et la pièce d'embarrage sur laquelle elle défile.

Avantageusement, ladite pièce d'embarrage de chaque série est totalement immergée.

Pour chaque série, il existe donc une deuxième pièce d'embarrage Y₂ et pour chaque groupe, lesdites mèches pénètrent avec un angle α₂ formé entre la mèche et la normale de ladite pièce d'embarrage Y₂ compris de 0 à 89°, préférentiellement 5° à 85°, préférentiellement de 5° à 45°, préférentiellement de 5° à 30°.

Ladite pièce d'embarrage est au moins partiellement immergée dans la poudre de manière à ce que la poudre puisse pénétrer entre la mèche et la pièce d'embarrage sur laquelle elle défile. Avantageusement, ladite pièce d'embarrage de chaque série est totalement immergée.

Avantageusement, toutes les pièces d'embarrage Y₂ sont situées à la même hauteur par rapport au fond de la cuve et sont décalées l'une par rapport à l'autre d'au moins l'épaisseur d'une mèche, en particulier de 5mm à 100mm, notamment de 10mm à 50mm.

Avantageusement, toutes les pièces d'embarrage Y₂ sont équidistantes l'une de l'autre.

Avantageusement, les angles α₂ de chaque groupe de mèches formés entre la mèche et la normale de ladite pièce d'embarrage Y₂ au moins partiellement immergée dans la poudre sont identiques.

Avantageusement, la différence de hauteur entre la première pièce d'embarrage Y₁ et la deuxième pièce d'embarrage Y₂ est comprise de 10mm à 600mm, plus préférentiellement entre 50 et 300mm.

Après être passée sur ladite au moins une desdites Y₂ pièces d'embarrage de chaque série au moins partiellement immergée dans ladite poudre, chaque mèche (20) ressort dudit lit fluidisé avec un angle β₂ formé entre la mèche et la normale dudit embarrage Y₂ compris de 0 à 89°, préférentiellement 5° à 85°, préférentiellement de 5° à 45°, préférentiellement de 5° à 30°.

Avantageusement, les angles β₂ de chaque groupe de mèches formés entre la mèche et la normale de ladite pièce d'embarrage Y₂ au moins partiellement immergée dans la poudre sont identiques.

Avantageusement, les angles α₂ de chaque groupe de mèches formés entre la mèche et la normale de ladite pièce d'embarrage Y₂ au moins partiellement immergée dans la poudre sont identiques et les angles β₂ de chaque groupe de mèches formés entre la mèche et la normale de ladite pièce d'embarrage Y₂ au moins partiellement immergée dans la poudre sont identiques.

Avantageusement, α₂ = β₂.

Les mèches au niveau de ladite seconde pièce d'embarrage sont interpénétrées les unes par rapport aux autres.

Le terme « interpénétrée » signifie que les mèches passent les unes entre les autres en étant dépourvues de contact les unes avec les autres.

Après passage sur la deuxième pièce d'embarrage, lesdites mèches (20) de chaque groupe quittent la poudre, notamment le lit fluidisé compris dans la cuve et remontent
vers la sortie de la cuve jusqu'à une troisième pièce d'embarrage Y₃ de chaque série Xₙ.

Pour chaque série, il existe donc une troisième pièce d'embarrage Y₃ et pour chaque groupe, l'angle α₃ formé entre la mèche et la normale de ladite pièce d'embarrage Y₃ est compris de 0 à 89°, préférentiellement 5° à 85°, préférentiellement de 5° à 45°, préférentiellement de 5° à 30°.

Avantageusement, toutes les pièces d'embarrage Y₃ sont situées à la même hauteur par rapport au fond de la cuve et sont décalées l'une par rapport à l'autre d'au moins l'épaisseur d'une mèche, en particulier de 5mm à 100mm, notamment de 10mm à 50mm.

Avantageusement, toutes les pièces d'embarrage Y₃ sont équidistantes l'une de l'autre.

Avantageusement, les angles α₃ formés entre la mèche et la normale de ladite pièce d'embarrage Y₃ de chaque série ou groupe sont identiques.

Avantageusement, la différence de hauteur entre la deuxième pièce d'embarrage Y₂ et la troisième pièce d'embarrage Y₃ est comprise de 10mm à 600mm, plus préférentiellement entre 50 et 300mm.

Avantageusement, la différence de hauteur entre la première pièce d'embarrage Y₁ et la deuxième pièce d'embarrage Y₂ est comprise de 10mm à 600mm, plus préférentiellement entre 50 et 300mm et la différence de hauteur entre la deuxième pièce d'embarrage Y₂ et la troisième pièce d'embarrage Y₃ est comprise de 10mm à 600mm, plus préférentiellement entre 50 et 300mm.

On ne sortirait pas du cadre de l'invention si la troisième pièce d'embarrage Y₃ correspondait au bord de la sortie de la cuve.

Avantageusement, la troisième pièce d'embarrage Y₁ est distincte du bord d'entrée de cuve.

Dans un mode de réalisation, toutes les pièces d'embarrage Y₁, sont situées à la même hauteur par rapport au fond de la cuve et toutes les pièces d'embarrage Y₂ sont situées à la même hauteur par rapport au fond de la cuve et toutes les pièces d'embarrage Y₃ sont situées à la même hauteur par rapport au fond de la cuve, et chaque pièce d'embarrage Y₁, Y₂ et Y₃ sont respectivement décalées l'une par rapport à l'autre d'au moins l'épaisseur d'une mèche, en particulier de 5mm à 100mm, notamment de 10mm à 50mm.

Avantageusement, toutes les pièces d'embarrage Y₁, Y₂ et Y₃ sont équidistantes l'une de l'autre.

Avantageusement, les angles α₁, α₂, β₂, et α₃ formés entre la mèche et la normale de ladite pièce d'embarrage Y₁, Y₂ et Y₃ de chaque série ou groupe sont identiques.

Chaque groupe de mèches défile de manière séparée et chaque mèche est interpénétrée l'une par rapport à l'autre. Les mèches peuvent être séparées une sur deux mais il est bien évident que toutes les solutions sont possibles, par exemple deux sur trois....

Avantageusement, elles sont séparées selon une mèche sur deux.

Il est bien évident aussi qu'en fonction de la parité à l'origine ou non des N mèches parallèles ou de la parité, le nombre de mèche Nᵢ peut ne pas être identique sur chaque série Xₙ et donc sur chaque rouleau Y₁ ou (31) ainsi que Y₂ ou (32) ou Y₃ (33).

Par exemple, si N = 50 mèches divisées en 5 groupes et donc 5 séries d'embarrages, il peut y avoir Nᵢ = 10 mèches par groupe et donc par série mais on peut imaginer également une configuration de 4 groupes de Nᵢ = 12 mèches et un groupe de Nᵢ = 2 mèches.

De la même manière, si N = 51 mèches divisées en 5 groupes, il peut y avoir Nᵢ = 10 mèches par groupe pour 4 groupes, le dernier comportant alors Nᵢ = 11 mèches.

Avantageusement, chaque embarrage comprend de Nᵢ - 1 à Nᵢ + 1 mèches où Nᵢ est la partie entière de N/X..

Il peut donc y avoir n'importe quelle configuration à partir du moment où chaque mèche présente un temps de séjour dans la poudre identique.

Mais quelle que soit la configuration, ΣNᵢ = N et X ≤ N.

Selon un mode de réalisation, la présente invention concerne un procédé tel que ci-dessus défini caractérisé en ce qu'une seule matrice polymère thermoplastique est utilisée et la poudre de polymère thermoplastique est fluidisable.

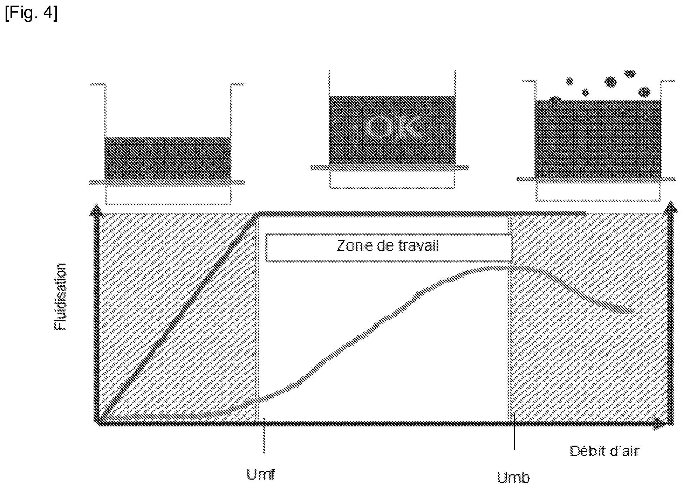

Le terme « fluidisable » signifie que le débit d'air appliqué au lit fluidisé est compris entre le débit minimum de fluidisation (Umf) et le débit minimum de bullage (Umf) tel que représenté figure 4.

En dessous du débit minimum de fluidisation, il n'y pas de fluidisation, les particules de poudre de polymère tombent dans le lit et ne sont plus en suspension et le procédé selon l'invention ne peut fonctionner.

Au-dessus du débit minimum de bullage, les particules de poudre s'envolent et la composition du lit fluidisé constante ne peut plus être maintenue constante.

Avantageusement, le diamètre en volume D90 des particules est compris 50 à 500 µm, avantageusement de 120 à 300 µm.

Avantageusement, le diamètre en volume D10 des particules est compris de 5 à 200 µm, avantageusement de 35 à 100 µm.

Avantageusement, le diamètre en volume des particules de poudre est compris dans le ratio D90/D10, soit compris de 1,5 à 50, avantageusement de 2 à 10.

Avantageusement, le diamètre moyen D50 en volume des particules de poudre de polymère thermoplastique est compris de 30 à 300 µm, notamment de 50 à 200 µm, plus particulièrement de 70 à 200µm.

Les diamètres en volume des particules (D10, D50 et D90) sont définis selon la norme ISO 9276 :2014.

Le « D50 » correspond au diamètre moyen en volume, c'est à dire la valeur de la taille de particule qui divise la population de particules examinée exactement en deux.

Le « D90 » correspond à la valeur à 90% de la courbe cumulée de la distribution granulométrique en volume.

Le « D10 » correspond à la correspond à la taille de 10% du volume des particules.

Selon un autre mode de réalisation du procédé selon l'invention, un cantre est présent avant la cuve comprenant un lit fluidisé pour le contrôle de la tension de ladite mèche ou desdites mèches à l'entrée de la cuve comprenant un lit fluidisé.

### Etape de chauffage

Dans un autre mode de réalisation, la présente invention concerne un procédé tel que défini ci-dessus caractérisé en ce qu'il comprend de plus au moins une étape de chauffage de la matrice thermoplastique permettant la fusion ou le maintien en fusion dudit polymère thermoplastique après pré-imprégnation,
ladite au moins une étape de chauffage étant effectuée au moyen d'au moins une pièce d'embarrage (E) conductrice ou non de la chaleur et d'au moins un système de chauffage, à l'exception d'une calandre chauffante,
ladite mèche ou lesdites mèches étant en contact avec une partie ou la totalité de la surface de ladite au moins une pièce d'embarrage (E) et défilant partiellement ou totalement à la surface de ladite au moins une pièce d'embarrage (E) au niveau du système de chauffage.

Une première étape de chauffage peut être immédiatement consécutive à l'étape de pré-imprégnation ou alors d'autres étapes peuvent intervenir entre l'étape de pré-imprégnation et l'étape de chauffage.

Néanmoins, la première étape de mise en oeuvre par un système de chauffage muni d'au moins une pièce d'embarrage (E) ne correspond pas à une calandre chauffante, et est toujours effectuée avant l'étape de calandrage qui est nécessaire pour lisser et mettre en forme le ruban.

Avantageusement, ladite première étape de chauffage est immédiatement consécutive à l'étape de pré-imprégnation. L'expression « immédiatement consécutive » signifie qu'il n'y a pas d'étape intermédiaire entre l'étape de pré-imprégnation et ladite étape de chauffage.

Avantageusement, une seule étape de chauffage est effectuée, immédiatement consécutive à l'étape de pré-imprégnation.

Avantageusement, ledit au moins un système de chauffage est choisi parmi une lampe infrarouge, une lampe UV et un chauffage par convection si la pièce d'embarrage est conductrice de la chaleur.

Le matériau fibreux étant en contact avec le ou les embarrage(s) dans le système de chauffage, et l'embarrage étant conducteur, le système de chauffage s'effectue donc également par conduction.

Avantageusement, ledit au moins un système de chauffage est choisi parmi une lampe infrarouge.

Avantageusement, si la pièce d'embarrage n'est pas conductrice de la chaleur, ledit au moins un système de chauffage est choisi parmi un chauffage micro-onde, un chauffage laser, et un chauffage Hautes Fréquences (HF).

La pièce d'embarrage (E) non chauffante et non conductrice de la chaleur n'absorbe pas à la longueur d'onde du système de chauffage micro-onde, laser ou HF.

Avantageusement, ledit au moins un système de chauffage est choisi parmi un chauffage micro-onde.

Avantageusement, ladite au moins une pièce d'embarrage (E) est un rouleau de compression R'i de forme convexe, concave ou cylindrique.

Il faut noter que les rouleaux de compression correspondant aux pièces d'embarrage (E) ou celles utilisées pour l'étape de pré-imprégnation peuvent être identiques ou différents que ce soit au niveau du matériau ou de la forme et ses caractéristiques (diamètre, longueur, largeur, hauteur ... en fonction de la forme).

La forme convexe est favorable à l'épanouissement alors que la forme concave est défavorable à l'épanouissement bien qu'il s'effectue néanmoins.

La au moins une pièce d'embarrage (E) peut également être une alternance de forme convexe et concave. Dans ce cas, le défilement de la mèche sur un rouleau de compression de forme convexe provoque l'épanouissement de ladite mèche puis le défilement de la mèche sur un rouleau de compression de forme concave provoque la rétractation de la mèche et ainsi de suite permettant si besoin d'améliorer l'homogénéité de l'imprégnation, notamment à coeur.

L'expression « rouleau de compression » signifie que la mèche qui défile s'appuie partiellement ou totalement sur la surface dudit rouleau de compression, ce qui induit l'épanouissement de ladite mèche.

Les rouleaux peuvent être libres (en rotation) ou fixes.

Ils peuvent être lisses, striés ou gorgés.

Avantageusement, les rouleaux sont cylindriques et striés. Lorsque les rouleaux sont striés, deux stries peuvent être présentes en sens opposée l'une de l'autre en partant du centre dudit rouleau permettant ainsi l'éloignement des mèches vers l'extérieure du rouleau ou en sens opposée l'une de l'autre en partant de l'extérieur dudit rouleau permettant ainsi de ramener les mèches vers le centre du rouleau.

Un premier épanouissement de la mèche se produit au niveau desdites pièces d'embarrage lors de l'étape de pré-imprégnation en raison du défilement partiel ou total de ladite mèche sur la ou lesdites pièce(s) d'embarrage et un deuxième épanouissement se produit lors de l'étape de chauffage, au niveau desdits rouleaux de compression correspondants aux pièces d'embarrage (E) en raison du défilement partiel ou total de ladite mèche sur la ou lesdites pièce(s) d'embarrage (E). Ce deuxième épanouissement est précédé lors du passage de la mèche dans le système de chauffage avant son défilement partiel ou total sur la ou lesdites pièce(s) d'embarrage (E) d'une rétractation de la mèche en raison de la fusion du polymère sur ladite mèche.

Ce deuxième épanouissement combiné à la fusion de ladite matrice polymère par le système de chauffage et à la rétractation de la mèche permettent d'homogénéiser la pré-imprégnation, de finaliser ainsi l'imprégnation ou de la parfaire et d'avoir ainsi une imprégnation homogène si elle ne l'était pas de manière avoir un taux élevé de fibres en volume, notamment constant dans au moins 70% du volume de la bande ou ruban, notamment dans au moins 80% du volume de la bande ou ruban, en particulier dans au moins 90% du volume de la bande ou ruban, plus particulièrement dans au moins 95% du volume de la bande ou ruban, ainsi que de diminuer la porosité.

L'épanouissement est fonction du matériau fibreux utilisé. Par exemple, l'épanouissement d'un matériau en fibre de carbone est beaucoup plus important que celui d'une fibre de lin.

L'épanouissement est aussi fonction du nombre de fibres dans la mèche, de leur diamètre moyen et de leur cohésion de par l'ensimage.

Le diamètre dudit au moins un rouleau de compression (embarrage (E)) est compris de 3 mm à 100 mm, préférentiellement de 3 mm à 20 mm, en particulier de 5 mm à 10 mm.

Au-dessous de 3 mm, la déformation de la fibre induite par le rouleau de compression est trop importante.

Avantageusement, le rouleau de compression est cylindrique et non cannelé et en particulier est métallique.

Avantageusement, ladite au moins une pièce d'embarrage (E) est constituée d'au moins un 1 rouleau de compression de forme cylindrique.

Avantageusement, ladite au moins une pièce d'embarrage (E) est constituée de 1 à 15 rouleaux de compression (R'1 à R'15) de forme cylindrique, préférentiellement de 3 à 15 rouleaux de compression (R'3 à R'15), notamment de 6 à 10 rouleaux de compression (R'6 à R'10).

Il est bien évident que quel que soit le nombre de pièces d'embarrages (E) présentes, elles sont toutes situées ou comprises dans l'environnement du système de chauffage, c'est-à-dire qu'elle ne sont pas à l'extérieur du système de chauffage.

Selon une première variante, ladite au moins une pièce d'embarrage (E) est constituée d'un seul rouleau de compression, en particulier de forme cylindrique.

Avantageusement, ladite mèche ou lesdites mèches forme(nt) un angle λ'1 de 0,1 à 89°, en particulier de 5 à 75°, notamment de 10 à 45° avec un premier rouleau de compression R'1 et la tangente horizontale audit rouleau de compression R'1, ladite mèche ou lesdites mèches s'épanouissant au contact dudit rouleau de compression R'1.

On ne sortirait du cadre de l'invention si la mèche formait un angle avec ladite tangente horizontale audit rouleau de compression R'1 compris de plus de 89° à 360° (modulo 360°).

Dans le cas où la mèche forme un angle d'au moins 360° avec ladite tangente horizontale audit rouleau de compression R'1, cela signifie que la mèche a effectué au moins un tour complet dudit rouleau.

Selon une deuxième variante, ladite au moins une pièce d'embarrage (E) est constituée de deux rouleaux de compression, en particulier de forme cylindrique.

Avantageusement, ladite mèche ou lesdites mèches forme(nt) un angle λ'1 de 0 à 180°, en particulier de 5 à 75°, notamment de 10 à 45° avec un premier rouleau de compression R'1 et la tangente horizontale audit rouleau de compression R'1, ladite mèche ou lesdites mèches s'épanouissant au contact dudit rouleau de compression R'1.

On ne sortirait du cadre de l'invention si la mèche formait un angle avec ladite tangente horizontale audit rouleau de compression R'1 compris de plus de 180° à 360° (modulo 360°).

Dans le cas où la mèche forme un angle d'au moins 360° avec ladite tangente horizontale audit rouleau de compression R'1, cela signifie que la mèche a effectué au moins un tour complet dudit rouleau.

Avantageusement, un deuxième rouleau R'2 de compression est présent après ledit premier rouleau de compression R'1, ladite mèche ou lesdites mèches formant un angle λ'2 de 0 à 180°, en particulier de 5 à 75°, notamment de 10 à 45° avec ledit deuxième rouleau de compression R'2 et la tangente horizontale audit rouleau de compression R'2, ladite mèche ou lesdites mèches s'épanouissant au contact dudit deuxième rouleau de compression.

On ne sortirait du cadre de l'invention si la mèche formait un angle avec ladite tangente horizontale audit rouleau de compression R'2 compris de plus de 180° à 360° (modulo 360°).

Dans le cas où la mèche forme un angle d'au moins 360° avec ladite tangente horizontale audit rouleau de compression R'2, cela signifie que la mèche a effectué au moins un tour complet dudit rouleau.

La mèche défile en dessous du rouleau R'1 puis au-dessus du rouleau R'2. Il est bien évident que le défilement de la mèche au-dessus du rouleau R'1 puis au-dessous du rouleau R'2 est également un mode de réalisation de l'invention.

Le rouleau R'2 peut être situé au-dessus du rouleau R'1, ledit rouleau R'1 précédant ledit rouleau R'2.

Il est de la même manière évident que le rouleau R'2 peut se situer au-dessous du rouleau R'1.

La différence de hauteur entre le rouleau R'1 et le rouleau R'2 est supérieure ou égale à 0.

Avantageusement, la différence de hauteur entre le rouleau R'1 et le rouleau R'2 est comprise de 1 à 20 cm, préférentiellement de 2 à 15 cm, en particulier de 3 à 10 cm.

Avantageusement, les deux rouleaux sont au même niveau et de même diamètre et la différence de hauteur est alors nulle.

La distance entre les deux rouleaux est comprise de 1 à 20 cm, préférentiellement de 2 à 15 cm, en particulier de 3 à 10 cm.

Selon une troisième variante, ladite au moins une pièce d'embarrage (E) est constituée de 3 rouleaux de compression, en particulier de forme cylindrique.

Avantageusement, ladite mèche ou lesdites mèches forme(nt) un angle λ'1 de 0,1 à 89°, en particulier de 5 à 75°, notamment de 10 à 45° avec un premier rouleau de compression R'1 et la tangente horizontale audit rouleau de compression R'1, ladite mèche ou lesdites mèches s'épanouissant au contact dudit premier rouleau de compression.

On ne sortirait du cadre de l'invention si la mèche formait un angle avec ladite tangente horizontale audit rouleau de compression R'1 compris de plus de 89° à 360° (modulo 360°).

Dans le cas où la mèche forme un angle d'au moins 360° avec ladite tangente horizontale audit rouleau de compression R'1, cela signifie que la mèche a effectué au moins un tour complet dudit rouleau.

Avantageusement, le deuxième rouleau est présent après ledit premier rouleau, ladite mèche ou lesdites mèches formant un angle λ'2 de 0 à 180°, en particulier de 5 à 75°, notamment de 10 à 45° avec le deuxième rouleau de compression R'2 et la tangente horizontale audit rouleau de compression R'2, ladite mèche ou lesdites mèches s'épanouissant au contact dudit deuxième rouleau de compression.

On ne sortirait du cadre de l'invention si la mèche formait un angle avec ladite tangente horizontale audit rouleau de compression R'2 compris de plus de 180° à 360° (modulo 360°).

Dans le cas où la mèche forme un angle d'au moins 360° avec ladite tangente horizontale audit rouleau de compression R'2, cela signifie que la mèche a effectué au moins un tour complet dudit rouleau.

Avantageusement, le troisième rouleau de compression R'3 est présent après ledit deuxième rouleau de compression R'2, ladite mèche ou lesdites mèches formant un angle λ'3 de 0 à 180°, en particulier de 5 à 75°, notamment de 10 à 45° avec ledit troisième rouleau de compression R'3 et la tangente horizontale audit rouleau de compression R'3, ladite mèche ou lesdites mèches s'épanouissant au contact dudit troisième rouleau de compression R'3.

On ne sortirait du cadre de l'invention si la mèche formait un angle avec ladite tangente horizontale audit rouleau de compression R'3 compris de plus de 180° à 360° (modulo 360°).

Dans le cas où la mèche forme un angle d'au moins 360° avec ladite tangente horizontale audit rouleau de compression R'3, cela signifie que la mèche a effectué au moins un tour complet dudit rouleau.

La mèche défile en dessous du rouleau R'1 puis au-dessus du rouleau R'2 et ensuite au-dessous du rouleau R'3.

Il est bien évident que le défilement de la mèche au-dessus du rouleau R'1 puis au-dessous du rouleau R'2 et ensuite au-dessus du rouleau R'3 est également un mode de réalisation de l'invention.

Les trois rouleaux peuvent être au même niveau, mais avantageusement, le rouleau R'2 est situé au-dessus du rouleau R'1, et le rouleau R'3 est situé au-dessous du rouleau R'2, ledit rouleau R'1 précédant ledit rouleau R'2 qui lui-même précède R'3.

Toutes les positions géométriques relatives entre les trois rouleaux sont possibles.

La différence de hauteur entre le rouleau le plus bas et le rouleau le plus haut est supérieure ou égale à 0.

Avantageusement, la différence de hauteur entre chacun des trois rouleaux est comprise de 1 à 20 cm, préférentiellement de 2 à 15 cm, en particulier de 3 à 10 cm.

La distance entre chacun des trois rouleaux est comprise de 1 à 20 cm, préférentiellement de 2 à 15 cm, en particulier de 3 à 10 cm.

Avantageusement, le rouleau R'1 précède le rouleau R'3 et sont au même niveau et le rouleau R'2 se situe entre le rouleau R'1 et le rouleau R'3 et se situe au-dessus des deux autres rouleaux.

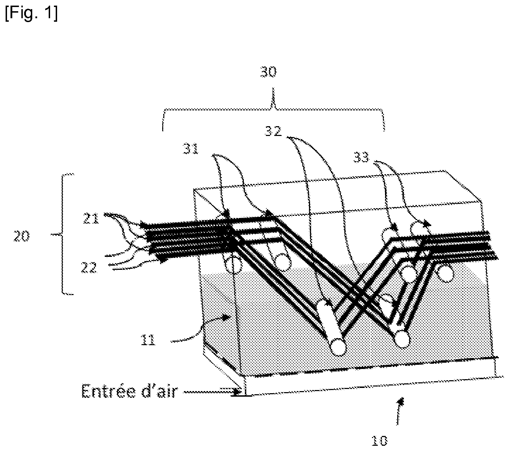

La figure 1 présente un exemple de système de chauffage présentant trois rouleaux de compression.

La longueur l entre l'entrée du système de chauffage et le premier rouleau R'1 est variable en fonction du polymère utilisé et de la vitesse de défilement de la bande.

l représente donc la longueur suffisante pour que le polymère soit en fusion, au moins partielle, en particulier totale, à l'entrée du premier rouleau.

Dans un mode de réalisation, quatre (4) à quinze (15) rouleaux peuvent être présents.

De manière générale, l'angle ou les angles λ'4-i (i étant de 4 à 15) formé par ladite ou lesdites mèches avec les rouleaux R'4-i est(sont) compris de 0 à 180°, en particulier de 5 à 75°, notamment de 10 à 45°.

De manière générale, la différence de hauteur entre chaque rouleau R'i et entre le rouleau le plus bas et le rouleau le plus haut est supérieure ou égale à 0.

Avantageusement, la différence de hauteur entre chacun des rouleaux R'i est comprise de 1 à 20 cm, préférentiellement de 2 à 15 cm, en particulier de 3 à 10 cm.

De manière générale, la distance entre chacun des rouleaux R'i est comprise de 1 à 20 cm, préférentiellement de 2 à 15 cm, en particulier de 3 à 10 cm.

Avantageusement, le pourcentage d'épanouissement lors de l'étape de chauffage entre l'entrée du premier rouleau de compression R'1 et la sortie du dernier rouleau de compression R'i est d'environ 0 à 300%, en particulier de 0 à 50%.

Avantageusement, le pourcentage d'épanouissement lors de l'étape de chauffage entre l'entrée du premier rouleau de compression R'1 et la sortie du dernier rouleau de compression R'i est d'environ 1 à 50%.

Avantageusement, ledit polymère thermoplastique est un polymère thermoplastique non réactif. Le système de chauffage permet donc la fusion dudit polymère thermoplastique après pré-imprégnation comme décrit ci-dessus.

Avantageusement, ledit polymère thermoplastique est un prépolymère réactif susceptible de réagir sur lui-même ou avec un autre prépolymère, en fonction des fins de chaîne portées par ledit prépolymère, ou encore avec un allongeur de chaîne, ledit polymère réactif étant optionnellement polymérisé lors de l'étape de chauffage.

En fonction de la température et/ou de la vitesse de défilement de la mèche, le système de chauffage permet la fusion dudit prépolymère thermoplastique après pré-imprégnation comme décrit ci-dessus sans polymérisation dudit prépolymère avec lui-même ou avec un allongeur de chaîne ou desdits prépolymères entre eux.

Avantageusement, le taux de porosité dans ledit matériau fibreux imprégné est compris de 0% et 30%, notamment de 1% à 10%, en particulier de 1% à 5%.

Une deuxième étape de chauffage peut être effectuée après l'étape de calandrage ci-dessous.

Cette deuxième étape de chauffage permet de corriger les éventuels défauts, notamment d'homogénéité, qui pourraient subsister après la première étape de chauffage.

Elle est effectuée avec le même système que pour la première étape.

Avantageusement, le système de chauffage de cette deuxième étape est constitué de deux rouleaux.

De manière facultative, lesdites étapes de pré-imprégnation et d'imprégnation sont complétées par une étape de conformation dans une filière régulée à une température constante, ladite étape de conformation étant réalisée avant ladite étape de calandrage. De manière facultative, cette filière est une filière d'extrusion en tête d'équerre et permet le recouvrement de ladite mèche unique ou de ladite pluralité de mèches parallèles après imprégnation par la poudre, ladite étape de recouvrement étant réalisée avant ladite étape de calandrage, par un polymère thermoplastique fondu, pouvant être identique ou différent dudit polymère de pré-imprégnation, ledit polymère fondu étant de préférence de même nature que ledit polymère de pré-imprégnation.

Pour cela, à la sortie du système de chauffage est connecté un dispositif de recouvrement pouvant comporter une tête d'équerre de recouvrement, comme cela est également décrit dans le brevet EP0406067. Le polymère de recouvrement peut être identique ou différent de la poudre polymère en cuve. De préférence, il est de même nature. Un tel recouvrement permet non seulement de compléter l'étape d'imprégnation des fibres pour obtenir un taux volumique final de polymère dans la gamme souhaitée et éviter la présence à la surface de la mèche imprégnée, d'un taux de fibres localement trop important, qui nuirait au soudage des tapes lors de la fabrication de la pièce composite, notamment pour l'obtention de matériaux fibreux dits « prêts à l'emploi » de bonne qualité, mais également pour améliorer les performances du matériau composite obtenu.

### Etape de mise en forme

Optionnellement, une étape de mise en forme de la mèche ou desdites mèches parallèles dudit matériau fibreux imprégné est effectuée.

Un système de calandrage tel que décrit dans WO 2015/121583 peut être utilisé.

Avantageusement, elle est effectuée par calandrage au moyen d'au moins une calandre chauffante sous forme de ruban ou nappe unique unidirectionnel ou d'une pluralité de rubans ou nappe parallèles unidirectionnels avec, dans ce dernier cas, ladite calandre chauffante comportant une pluralité de gorges de calandrage, de préférence jusqu'à 200 gorges de calandrage, en conformité avec le nombre desdits rubans et avec une pression et/ou un écartement entre les rouleaux de ladite calandre régulés par un système asservi.

Cette étape est toujours effectuée après l'étape de chauffage s'il n'y en a qu'une ou bien entre la première étape de chauffage et la deuxième étape de chauffage lorsque les deux coexistent.

Avantageusement, l'étape de calandrage est réalisée au moyen d'une pluralité de calandres chauffantes, montées en parallèle et/ou en série par rapport au sens de défilement des mèches de fibres.

Avantageusement, ladite (ou lesdites) calandre(s) chauffante(s) comprend (comprennent) un système de chauffage intégré par induction ou par microondes, de préférence par microondes, couplé à la présence de charges carbonées dans ledit polymère thermoplastique ou mélange de polymères thermoplastiques.

Selon un autre mode de réalisation, une presse à bande est présente entre le système de chauffage et la calandre.

Selon encore un autre mode de réalisation, une filière chauffante est présente entre le système de chauffage et la calandre.

Selon un autre mode de réalisation, une presse à bande est présente entre le système de chauffage et la calandre et une filière chauffante est présente entre la presse à bande et la calandre.

Avantageusement, l'étape de mise en forme de ladite mèche ou desdites mèches parallèles dudit matériau fibreux imprégné, par calandrage au moyen d'au moins une calandre chauffante sous forme de ruban ou nappe unique unidirectionnel ou d'une pluralité de rubans ou nappes parallèles unidirectionnels avec, dans ce dernier cas, ladite calandre chauffante comportant une pluralité de gorges de calandrage, de préférence jusqu'à 300 gorges de calandrage, en conformité avec le nombre desdits rubans et avec une pression et/ou un écartement entre les rouleaux de ladite calandre régulés par un système asservi.

Avantageusement, l'étape de calandrage est réalisée au moyen d'une pluralité de calandres chauffantes, montées en parallèle et/ou en série par rapport au sens de défilement des mèches de fibres.

Avantageusement, ladite (ou lesdites) calandre(s) chauffante(s) comprend (comprennent) un système de chauffage intégré par induction ou par microondes, de préférence par microondes, couplé à la présence de charges carbonées dans ledit polymère thermoplastique ou mélange de polymères thermoplastiques.

Dans un mode de réalisation, ladite (ou lesdites) calandre(s) chauffante(s) est (sont) couplée(s) à un dispositif de chauffage complémentaire rapide, situé avant et/ou après ladite (chaque) calandre, en particulier un dispositif de chauffage par microondes ou induction couplé à la présence de charges carbonées dans ledit polymère ou dans ledit mélange de polymères, ou un dispositif de chauffage infrarouge IR, ou Laser ou par contact direct avec une autre source de chaleur comme une flamme ou un gaz chaud.

Dans un autre mode de réalisation, ladite ou lesdites étape(s) d'imprégnation est(sont) complétée(s) par une étape de recouvrement de ladite mèche unique ou de ladite pluralité de mèches parallèles après imprégnation par la poudre, ladite étape de recouvrement étant réalisée avant ladite étape de calandrage, par un polymère thermoplastique fondu, pouvant être identique ou différent dudit polymère sous forme de poudre en lit fluidisé, ledit polymère fondu étant de préférence de même nature que ledit polymère sous forme de poudre en lit fluidisé, de préférence avec ledit recouvrement s'effectuant par extrusion en tête d'équerre par rapport à ladite mèche unique ou à ladite pluralité de mèches parallèles.

Selon un autre aspect, la présente invention concerne un ruban ou une nappe unidirectionnel de matériau fibreux pré-imprégné, en particulier ruban ou nappe enroulé sur bobine, caractérisé en ce qu'il(elle) est obtenu(e) par un procédé tel que défini ci-dessus.

Avantageusement, le ruban ou la nappe a une largeur (l) et une épaisseur (ep) adaptées à une dépose par robot dans la fabrication de pièces en trois dimensions, et de préférence a une largeur (l) d'au moins 5 mm et pouvant aller jusqu'à 600mm, de préférence comprise entre 50 et 600 mm et de manière encore plus préférée comprise entre 50 et 300mm.

La dépose par robot peut être effectuée avec ou sans refente.

Avantageusement, le polymère thermoplastique du ruban ou de la nappe est un polyamide choisi parmi notamment un polyamide aliphatique tel que choisi PA 6, PA 11, PA 12, PA 66, PA 46, PA 610, PA 612, PA 1010, PA 1012, PA 11/1010 ou PA 12/1010 ou un polyamide semi-aromatique tel que un PA MXD6 et un PA MXD10 ou choisi parmi PA 6/6T, un PA 66/6T, un PA 6I/6T, un PA MPMDT/6T, un PA MXDT/6T, un PA PA11/10T, un PA 11/6T/10T, un PA MXDT/10T, un PA MPMDT/10T, un PA BACT/10T, un PA BACT/6T, PA BACT/10T/6T, un PA 11/BACT/10T, un PA 11/MPMDT/10T et un PA 11/MXDT/10T, un PVDF, un PEEK, PEKK et un PEI ou un mélange de ceux-ci.

Selon un autre aspect, la présente invention concerne l'utilisation du procédé tel que défini ci-dessus, pour la fabrication de rubans ou de nappes calibrés adaptés à la fabrication de pièces composites en trois dimensions, par dépose automatique desdit(e)s rubans ou nappes au moyen d'un robot.

Selon un autre aspect, la présente invention concerne l'utilisation du ruban ou de la nappe de matériau fibreux pré-imprégné, tel que défini(e) ci-dessus, dans la fabrication de pièces composites en trois dimensions.

Avantageusement, ladite fabrication desdites pièces composites concerne les domaines des transports, en particulier automobile, du pétrole et du gaz, en particulier l'offshore, du stockage de gaz, aéronautique civile ou militaire, aérospatiale, nautique, ferroviaire ; des énergies renouvelables, en particulier éolienne, hydrolienne, les dispositifs de stockage d'énergie, les panneaux solaires ; des panneaux de protection thermique ; des sports et loisirs, de la santé et du médical, de la sécurité et de l'électronique.

Selon encore un autre aspect, la présente invention concerne une pièce composite en trois dimensions, caractérisée en ce qu'elle résulte de l'utilisation d'au moins un ruban ou d'une nappe unidirectionnel de matériau fibreux pré imprégné tel que défini ci-dessus.

### Description des figures

[Fig. 1] décrit un exemple de l'étape de pré-imprégnation, sans être limité à celui-ci, dans une cuve comprenant un lit fluidisé, et dans lequel les N mèches parallèles (20) sont séparées en X= 2 groupes de mèches parallèles (21) et (22) qui défilent parallèlement de manière séparée sur deux séries d'embarrages Yₘ (30) constituées chacune de trois embarrages (m =3 : (31), (32) et (33)), les embarrages (32) étant au totalement immergés dans le lit.
[Fig. 2] est une vue de dessus et de côté de l'exemple décrit dans la figure 1.

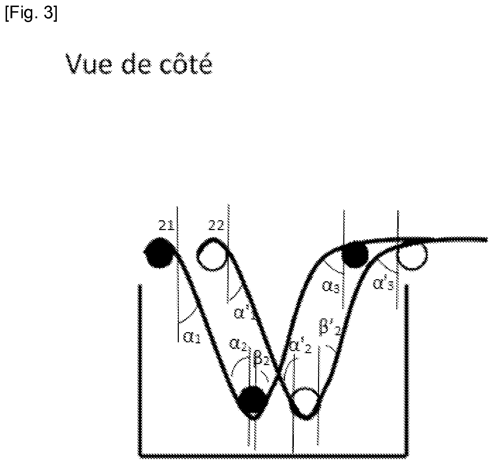

[Fig. 3] est la vue de côté de la figure 2 dans laquelle les angles des groupes de mèches avec les pièces d'embarrages sont présentés.
[Fig. 4] présente la fluidisation en fonction du débit d'air. Le débit d'air appliqué au lit fluidisé doit être compris entre le débit minimum de fluidisation (Umf) et le débit minimum de bullage (Umf).
[Fig. 5] présente un schéma d'un système de chauffage selon l'invention à trois rouleaux conducteurs ou non conducteurs.

### EXEMPLES

### Exemple comparatif

### Imprégnation

L'imprégnation a été effectuée telle que décrite dans WO 2018/115736 sur une mèche de fibre de carbone (FC) 12K T700 31E de Toray de diamètre 7µm et titrage de la fibre à 0,8g/m avec une poudre de BACT/10T (0.7/1 en poids) présentant une D50 = 117 µm (D10 = 59 µm et D90 = 204 µm)

### Etape de chauffage

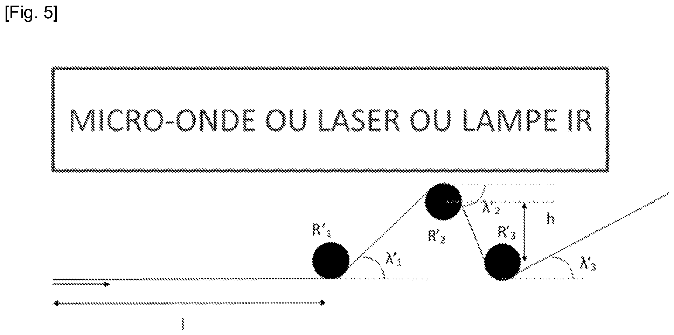

Le système de chauffage utilisé est celui décrit dans la figure 5 mais avec neuf rouleaux cylindriques R'₁ à R'₉ fixes et de diamètre 15mm et au même niveau chacun.

La vitesse d'avancement de la mèche est de 10 m/min
L'infrarouge utilisé présente une puissance de 25 kW, la hauteur entre l'infrarouge et les axes des rouleaux est de 15 cm.

Les angles α'₁ à α'₉ sont identiques et de 25°.

La hauteur h est égale à 0.

La longueur l est de 1000 mm
Les neuf rouleaux sont distants chacun de 43 mm.

Calandrage au moyen de deux calandres montées en série équipées d'un IR de 1kW chacune après l'étape de chauffage.

### Exemple 1

### Imprégnation : mode opératoire général

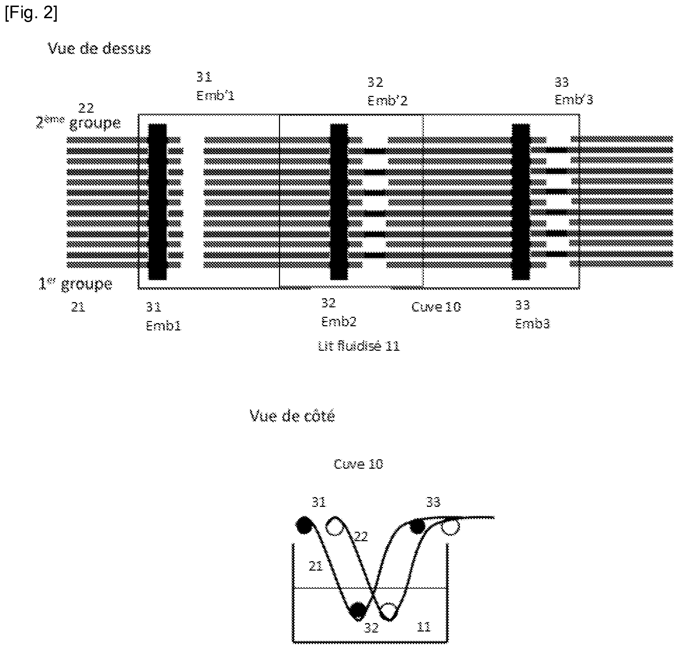

L'invention va être expliquée plus en détail en se basant sur l'exemple des figures 1 et 2 dans lesquelles une seule cuve comprenant un lit fluidisé est employée, et les N mèches sont divisées en X = 2 groupes mais il est bien évident que cet exemple est aussi bien valable quel que soit le nombre de groupes X présents. De la même manière, trois pièces d'embarrages Yₘ (30) par série sont présents mais il est bien évident que cet exemple est aussi bien valable quel que soit le nombre de pièces d'embarrages Yₘ (30) présentes.

L'invention consiste donc à diviser (ou séparer) l'ensemble N des mèches présentes en entrée de cuve en deux groupes (1^{er} (21) et 2^{ème} (22) groupes) (figure 2) de N/2 mèches si N est un nombre pair ou par exemple respectivement (N+1)/2 mèches (1^{er} groupe) et (N-1)/2 (2^{nd} groupe) si N est un nombre impair. En vue de haut de l'ensemble N de mèches en entrée de cuve, les mèches appartiennent alternativement au 1^{er} groupe (21) puis au 2^{ème} groupe (22).

Les mèches de fibres du 1^{er} groupe (21) plongent en direction de la poudre dans le lit fluidisé, après avoir quitté un premier élément d'embarrage noté emb1 (31) en formant un angle α₁ avec la normale à cette pièce d'embarrage.

Les mèches de fibres du 2^{ème} groupe plongent en direction de la poudre dans le lit fluidisé après avoir quitté une première pièce d'embarrage noté emb'1 en formant un angle α'₁ avec la normale à cette pièce d'embarrage. Les pièces d'embarrage emb1 et emb'1 sont séparées d'une distance Demb1-emb'1 au moins égale à l'épaisseur de la mèche, en particulier de 5mm à 100mm, notamment de 10mm à 50mm.

Les mèches de fibres du 1^{er} groupe de fibres (21) plongent ensuite dans le lit fluidisé de poudre jusqu'à arriver au contact d'une seconde pièce d'embarrage immergée au moins en partie dans le lit fluidisé (totalement sur la figure 1 et 2) noté emb2. L'angle formé entre chaque mèche de fibres et la normale à l'élément d'embarrage au point de contact est noté α₂.

De la même manière, les mèches du 2ème groupe de fibres (22) plongent ensuite dans le lit fluidisé de poudre jusqu'à arriver au contact d'une seconde pièce d'embarrage immergée au moins en partie dans le lit fluidisé (totalement sur la figure 1 et 2) noté emb'2. L'angle formé entre chaque mèche de fibres et la normale à la pièce d'embarrage au point de contact est noté α'₂.

De manière à conserver des parcours identiques en termes de temps de parcours, de tension des mèches de fibres et de frottements, les pièces d'embarrage emb2 et emb2' sont séparés d'une distance Demb2-emb'2 égale à la distance Demb1-emb'1 et sont de même nature (matériau, surface, finition etc...).

Les mèches de fibres du 1^{er} groupe de fibres (21) ressortent de la pièce d'embarrage emb2 avec un angle formé entre chaque mèche de fibres et la normale à la pièce d'embarrage noté β₂ puis les mèches imprégnées de poudre sortent hors du lit fluidisé de poudre pour arriver au contact d'une dernière pièce d'embarrage et noté emb3. L'angle formé entre chaque mèche de fibres et la normale à l'élément d'embarrage au point de contact est noté α₃.

De la même manière, les mèches de fibres du second groupe de fibres (22) ressortent de la pièce d'embarrage emb'2 avec un angle formé entre chaque mèche de fibres et la normale à la pièce d'embarrage noté β'₂ puis les mèches imprégnées de poudre sortent hors du lit fluidisé de poudre pour arriver au contact d'une dernière pièce d'embarrage et noté emb'3. L'angle formé entre chaque mèche de fibres et la normale à l'élément d'embarrage au point de contact est noté α'₃.

De manière à conserver des parcours identiques en termes de temps de parcours, de tension des mèches de fibres et de frottements, les éléments d'embarrage emb3 et emb'3 sont séparés d'une distance Demb3-emb'3 égale à la distance Demb2-emb2' et donc Demb1-emb'1 et sont de même nature (matériau, surface, finition etc...).

Pour obtenir des mèches de fibres équivalentes les unes aux autres avant la constitution du ruban ou de la nappe, notamment en termes de dimensions (largeur, épaisseur) et de taux de polymère imprégné ainsi que de taux de porosités, plusieurs paramètres doivent être mis sous contrôle parmi lesquels certains sont présentés ci-après.

Les angles d'entrée et de sortie des fibres au niveau des rouleaux d'embarrages d'entrée et de sortie ont un impact certain sur la tension générée sur les mèches de fibres et sur le taux de poudre emporté par la mèche de fibres. Il est nécessaire que le système soit donc symétrique sur ces points.

Dans le système présenté ici, on conserve ce temps de séjour pour les deux groupes de mèches de fibres de renfort en immergeant de manière équivalente les deux systèmes d'embarrages emb1' et emb2' ; ces deux systèmes d'embarrages ayant par ailleurs la même surface de contact avec les mèches de fibres sur les deux systèmes.

L'imprégnation effectuée selon l'exemple 1 avec un 1^{er} groupe de 3 mèches pour conduire aux bandes 1, 3 et 5 et un 2^{ème} groupe de 2 mèches pour conduire aux bandes 2 et 4 (angles α₁ et α'₁ identiques et de 17°, angles α₃ et α'₃ identiques et de 17°, puis étape de chauffage comme dans l'exemple comparatif donne des résultats comparables en homogénéité et porosité et avec un taux de résine identique à l'imprégnation effectuée selon l'exemple comparatif Le tableau I ci-dessous présente les résultats obtenus.

**TABLEAU I**

| | Taux moyen en BACT/10T (% en poids) | Variabilité (% en poids) |
|---|---|---|
| Bande seule (exemple comparatif | 33 | + ou - 1,5% |
| | | |
| Bande n°1 | 32,6 | + ou - 1,7% |
| Bande n°2 | 33,1 | + ou - 1,4% |
| Bande n°3 | 32,7 | + ou - 1,6% |
| Bande n°4 | 32,9 | + ou - 1,5% |
| Bande n°5 | 33 | + ou - 1,3% |

## Revendications

1. Procédé de fabrication d'un matériau fibreux pré-imprégné comprenant un matériau fibreux en fibres continues et au moins une matrice polymère thermoplastique, **caractérisé en ce que** ledit matériau fibreux pré-imprégné est réalisé en une pluralité de rubans ou nappes parallèles unidirectionnels et **en ce que** ledit procédé comprend une étape de pré-imprégnation, en particulier homogène, dudit matériau fibreux se présentant sous forme de N mèches parallèles (20) par ladite au moins une matrice polymère thermoplastique se présentant sous forme de poudre dans une cuve (10), ladite étape de pré-imprégnation étant effectuée par voie sèche dans ladite cuve (10),
lesdites N mèches parallèles (20) étant divisées en X groupes constitués de Nᵢ mèches parallèles dans le sens de défilement des mèches, ΣNᵢ = N et X ≤ N, X étant compris de 2 à 200, chaque groupe de mèches parallèles défilant de manière séparée au moyen de X séries constituées de Y pièces d'embarrage (30) dans la cuve, avec Y≥3, et dont l'une au moins desdites Y pièces d'embarrage (30) de chaque série est au moins partiellement immergée dans ladite poudre, chaque groupe de mèches défilant sur le même nombre Y de pièces d'embarrage (30),
ledit au moins polymère thermoplastique étant sélectionné parmi :
- les polymères et copolymères de la famille des polyamides (PA) aliphatiques, cycloaliphatiques ou des PA semi-aromatiques (encore dénommés polyphtalamides (PPA)),
- les polyurées, en particulier aromatiques,
- les polymères et copolymères de la famille des acryliques comme les polyacrylates, et plus particulièrement le polyméthacrylate de méthyle (PMMA) ou ses dérivés
- les polymères et copolymères de la famille des polyaryléther cétones (PAEK) comme le poly(éther éther cétone) (PEEK), ou les polyaryléther cétones cétones (PAEKK) comme le poly(éther cétone cétone) (PEKK) ou leurs dérivés,
- les polyéther-imides (PEI) aromatiques,
- les polyarylsulfures, en particulier les polyphénylène sulfures (PPS),
- les polyarylsulfones, en particulier les polyphénylène sulfones (PPSU),
- les polyoléfines, en particulier le polypropylène (PP);
- l'acide polylactique (PLA),
- l'alcool polyvinylique (PVA),
- les polymères fluorés, en particulier le poly(fluorure de vinylidène) (PVDF), ou le polytétrafluoroéthylène (PTFE) ou le polychlorotrifluoroéthylène (PCTFE),
et leurs mélanges.
lesdites mèches parallèles étant séparées les unes des autres dans ladite cuve avec un écartement au moins égal à la largeur de chaque mèche, au moins au niveau de ladite pièce d'embarrage au moins partiellement immergée,
lesdites Y pièces d'embarrages (30) de chaque série dans la cuve étant décalées dans le sens de défilement des mèches d'une distance au moins supérieure à l'épaisseur de chaque mèche,
le contrôle du taux de ladite au moins une matrice polymère thermoplastique dans ledit matériau fibreux étant effectué par contrôle du temps de séjour desdites N mèches dans la poudre,
le temps de séjour dans la poudre étant identique pour chacune desdites mèches,
lesdites N mèches étant optionnellement réunies hors de la poudre.

2. Procédé selon la revendication 1, **caractérisé en ce que** ladite cuve comprend un lit fluidisé (11).

3. Procédé selon la revendication 2, **caractérisé en ce que** chaque Yₘ pièce d'embarrage de chaque série dans le lit fluide est située à la même hauteur par rapport au fond de la cuve.

4. Procédé selon l'une des revendications 2 à 3, **caractérisé en ce que** les Y pièces d'embarrage de chaque série dans le lit fluide sont équidistantes chacune les unes des autres.

5. Procédé selon l'une des revendications 2 à 4, **caractérisé en ce que** lesdites Y pièces d'embarrage sont des rouleaux de compression de forme convexe, concave ou cylindrique, en particulier de forme cylindrique.

6. Procédé selon l'une des revendications 2 à 5, **caractérisé en ce que** chaque mèche de chaque groupe X pénètre dans ledit lit fluidisé et défile sur ladite au moins une desdites Y pièces d'embarrage de chaque série au moins partiellement immergée dans ladite poudre, avec un angle α₂ formé entre la mèche et la normale de ladite pièce d'embarrage Yₘ compris de 0 à 89°, préférentiellement 5° à 85°, préférentiellement de 5° à 45°, préférentiellement de 5° à 30°.

7. Procédé selon la revendication 6, **caractérisé en ce que** chaque mèche de chaque groupe X, après être passée sur ladite au moins une desdites Y pièces d'embarrage de chaque série au moins partiellement immergée dans ladite poudre, ressort dudit lit fluidisé avec un angle α'₂ formé entre la mèche et la normale dudit embarrage Yₘ compris de 0 à 89°, préférentiellement 5° à 85°, préférentiellement de 5° à 45°, préférentiellement de 5° à 30°.

8. Procédé selon l'une des revendications 2 à 7, **caractérisé en ce que** le temps de séjour dans la poudre est compris de 0,01s à 10s, préférentiellement de 0,1s à 5s, et en particulier de 0,1s à 3s.

9. Procédé selon l'une des revendications 2 à 8, **caractérisé en ce que** ladite étape de pré-imprégnation est effectuée avec épanouissement de chaque Ni mèches parallèles entre l'entrée et la sortie de la cuve comprenant ledit lit fluidisé.

10. Procédé selon la revendication 9, **caractérisé en ce que** ledit épanouissement de chaque Ni mèches parallèles est effectué au moins au niveau d'une des pièces d'embarrage Yₘ (30), en particulier au moins au niveau de ladite au moins une desdites Y pièces d'embarrage de chaque série au moins partiellement immergée dans ladite poudre.

11. Procédé selon l'une des revendications 1 à 10, **caractérisé en ce que** lesdites pièces d'embarrage Y de chaque série sont identiques.

12. Procédé selon l'une des revendications 2 à 11, **caractérisé en ce que** m = 3 pour chaque série, une première pièce d'embarrage Y₁ (31) pour chaque série étant située au-dessus dudit lit fluidisé après l'entrée de la cuve (10) et une dernière pièce d'embarrage Y₃ pour chaque série (33) sont situées au-dessus dudit lit fluidisé avant la sortie de la cuve (10), ladite pièce au moins partiellement immergée (32) étant située entre la première pièce d'embarrage Y₁ (31) et ladite dernière pièce d'embarrage Y₃ pour chaque série (33).

13. Procédé selon l'une des revendications 2 à 12, **caractérisé en ce que** ladite pièce (32) est totalement immergée dans ledit lit fluidisé (11).

14. Procédé selon l'une des revendications 2 à 13, **caractérisé en ce que** le taux de fibres dans ledit matériau fibreux pré-imprégné est compris de 45 à 65 % en volume, de préférence de 50 à 60% en volume, notamment de 54 à 60%.

15. Procédé selon l'une des revendications 1 à 14, **caractérisé en ce qu'**une seule matrice polymère thermoplastique est utilisée et la poudre de polymère thermoplastique est fluidisable.

16. Procédé selon l'une des revendications 1 à 15,
**caractérisé en ce qu'**il comprend de plus au moins une étape de chauffage de la matrice thermoplastique permettant la fusion ou le maintien en fusion dudit polymère thermoplastique après pré-imprégnation,
ladite au moins une étape de chauffage étant effectuée au moyen d'au moins une pièce d'embarrage (E) conductrice ou non de la chaleur et d'au moins un système de chauffage, à l'exception d'une calandre chauffante,
ladite mèche ou lesdites mèches étant en contact avec une partie ou la totalité de la surface de ladite au moins une pièce d'embarrage (E) et défilant partiellement ou totalement à la surface de ladite au moins une pièce d'embarrage (E) au niveau du système de chauffage.

17. Procédé selon l'une des revendications 1 à 16, **caractérisé en ce qu'**il comprend de plus une étape de mise en forme de ladite mèche ou desdites mèches parallèles dudit matériau fibreux imprégné, par calandrage au moyen d'au moins une calandre chauffante sous forme de ruban unique unidirectionnel ou d'une pluralité de rubans ou nappes parallèles unidirectionnels avec, dans ce dernier cas, ladite calandre chauffante comportant une pluralité de gorges de calandrage, de préférence jusqu'à 300 gorges de calandrage, en conformité avec le nombre desdits rubans et avec une pression et/ou un écartement entre les rouleaux de ladite calandre régulés par un système asservi.

18. Procédé selon la revendication 17, **caractérisé en ce que** l'étape de calandrage est réalisée au moyen d'une pluralité de calandres chauffantes, montées en parallèle et/ou en série par rapport au sens de défilement des mèches de fibres.

19. Procédé selon l'une des revendications 17 ou 18, **caractérisé en ce que** ladite (ou lesdites) calandre(s) chauffante(s) comprend (comprennent) un système de chauffage intégré par induction ou par microondes, de préférence par microondes, couplé à la présence de charges carbonées dans ledit polymère thermoplastique ou mélange de polymères thermoplastiques.

20. Procédé selon l'une des revendications 17 à 19, **caractérisé en ce que** ladite (ou lesdites) calandre(s) chauffante(s) est (sont) couplée(s) à un dispositif de chauffage complémentaire rapide, situé avant et/ou après ladite (chaque) calandre, en particulier un dispositif de chauffage par microondes ou induction couplé à la présence de charges carbonées dans ledit polymère ou dans ledit mélange de polymères, ou un dispositif de chauffage infrarouge IR, ou Laser ou par contact direct avec une autre source de chaleur comme une flamme ou un gaz chaud.

21. Procédé selon l'une des revendications 1 à 20, **caractérisé en ce que** ladite ou lesdites étape(s) d'imprégnation est(sont) complétée(s) par une étape de recouvrement de ladite mèche unique ou de ladite pluralité de mèches parallèles après imprégnation par la poudre, ladite étape de recouvrement étant réalisée avant ladite étape de calandrage, par un polymère thermoplastique fondu, pouvant être identique ou différent dudit polymère sous forme de poudre en lit fluidisé, ledit polymère fondu étant de préférence de même nature que ledit polymère sous forme de poudre en lit fluidisé, de préférence avec ledit recouvrement s'effectuant par extrusion en tête d'équerre par rapport à ladite mèche unique ou à ladite pluralité de mèches parallèles.

22. Procédé selon l'une des revendications 1 à 21, **caractérisé en ce que** ledit polymère thermoplastique comprend en outre des charges carbonées, en particulier du noir de carbone ou des nanocharges carbonées, de préférence choisies parmi des nanocharges carbonées, en particulier des graphènes et/ou des nanotubes de carbone et/ou des nanofibrilles de carbone ou leurs mélanges.

23. Procédé selon l'une des revendications 1 à 22, **caractérisé en ce que** le dit polymère thermoplastique comprend en outre des polymères à cristaux liquides ou du poly(butylène téréphtalate) cyclisé, ou des mélanges en contenant comme additifs.

24. Procédé selon la revendication 23, **caractérisé en ce que** ledit au moins polymère thermoplastique est un polymère dont la température de transition vitreuse est telle que Tg ≥ 80°C ou un polymère semi-cristallin dont la température de fusion Tf ≥ 150°C.

25. Procédé selon l'une des revendications 1 à 24, **caractérisé en ce que** ledit matériau fibreux comprend des fibres continues sélectionnées parmi les fibres de carbone, de verre, de carbure de silicium, de basalte, de silice, les fibres naturelles en particulier de lin ou de chanvre, de lignine, de bambou, de sisal, de soie, ou cellulosiques en particulier de viscose, ou les fibres thermoplastiques amorphes de température de transition vitreuse Tg supérieure à la Tg dudit polymère ou dudit mélange de polymères lorsque ce dernier est amorphe ou supérieure à la Tf dudit polymère ou dudit mélange de polymères lorsque ce dernier est semi-cristallin, ou les fibres thermoplastiques semi-cristallines de température de fusion Tf supérieure à la Tg dudit polymère ou dudit mélange de polymères lorsque ce dernier est amorphe ou supérieure à la Tf dudit polymère ou dudit mélange de polymères lorsque ce dernier est semi-cristallin, ou un mélange de deux ou de plusieurs desdites fibres, de préférence un mélange de fibres de carbone, de verre ou de carbure de silicium, en particulier des fibres de carbone.

## Patentansprüche

1. Verfahren zur Herstellung eines Prepreg-Fasermaterials, das ein Fasermaterial aus Endlosfasern und mindestens eine thermoplastische Polymermatrix umfasst, **dadurch gekennzeichnet, dass** das Prepreg-Fasermaterial aus mehreren unidirektionalen parallelen Bändern oder Bahnen besteht, und dadurch, dass das Verfahren einen Schritt eines insbesondere homogenen Vortränkens des in Form von N parallelen Strängen (20) vorliegenden Fasermaterials durch die mindestens eine thermoplastische Polymermatrix umfasst, die in Form eines Pulvers in einem Tank (10) vorliegt, wobei der Schritt des Vortränkens trocken in dem Tank (10) erfolgt,
wobei die N parallelen Stränge (20) in X Gruppen unterteilt sind, die aus Nᵢ parallelen Strängen in Laufrichtung der Stränge bestehen, ΣNᵢ = N und X ≤ N, wobei X von 2 bis 200 beträgt, jede Gruppe von parallelen Strängen getrennt mittels X Reihen durchläuft, die aus Y Spannstücken (30) im Tank bestehen, mit Y≥3, und wobei mindestens eines der Y Spannstücke (30) einer jeden Reihe zumindest teilweise in das Pulver eintaucht, jede Gruppe von Strängen auf derselben Zahl Y von Spannstücken (30) durchläuft,
wobei das mindestens eine thermoplastische Polymer ausgewählt ist aus:
- Polymeren und Copolymeren der Klasse der aliphatischen, cycloaliphatischen Polyamide (PA) oder der halbaromatischen PA (auch als Polyphthalamide (PPA) bezeichnet),
- Polyharnstoffen, insbesondere aromatischen,
- Polymeren und Copolymeren der Klasse der Acryle, wie Polyacrylate, und insbesondere Polymethylmethacrylat (PMMA) oder Derivaten davon,
- Polymeren und Copolymeren der Klasse der Polyaryletherketone (PAEK), wie Poly(etheretherketon) (PEEK), oder Polyaryletherketonketonen (PAEKK), wie Poly(etherketonketon) (PEKK), oder Derivaten davon,
- aromatischen Polyetherimiden (PEI),
- Polyarylsulfiden, insbesondere Polyphenylensulfiden (PPS),
- Polyarylsulfonen, insbesondere Polyphenylensulfonen (PPSU),
- Polyolefinen, insbesondere Polypropylen (PP);
- Polymilchsäure (PLA),
- Polyvinylalkohol (PVA),
- fluorierten Polymeren, insbesondere Poly(vinylidenfluorid) (PVDF), oder Polytetrafluorethylen (PTFE) oder Polychlortrifluorethylen (PCTFE),
und Mischungen davon,
wobei die parallelen Stränge im Tank mit einem Abstand voneinander getrennt sind, der zumindest in Höhe des zumindest teilweise eingetauchten Spannstücks mindestens gleich der Breite eines jeden Strangs ist,
wobei die Y Spannstücke (30) einer jeden Reihe im Tank in Laufrichtung der Stränge um einen Abstand versetzt sind, der zumindest größer als die Dicke eines jeden Strangs ist,
die Steuerung des Gehalts der mindestens einen thermoplastischen Polymermatrix im Fasermaterial durch die Steuerung der Verweilzeit der N Stränge im Pulver erfolgt,
die Verweilzeit im Pulver für jeden der Stränge identisch ist,
die N Stränge außerhalb des Pulvers gegebenenfalls miteinander vereinigt werden.

2. Verfahren nach Anspruch 1, **dadurch gekennzeichnet, dass** der Tank ein Wirbelbett (11) umfasst.

3. Verfahren nach Anspruch 2, **dadurch gekennzeichnet, dass** jedes Yₘ. Spannstück einer jeden Reihe im Wirbelbett in Bezug auf den Boden des Tanks in derselben Höhe angeordnet ist.

4. Verfahren nach einem der Ansprüche 2 bis 3, **dadurch gekennzeichnet, dass** die Y Spannstücke einer jeden Reihe im Wirbelbett äquidistant zueinander sind.

5. Verfahren nach einem der Ansprüche 2 bis 4, **dadurch gekennzeichnet, dass** es sich bei den Y Spannstücken um Presswalzen mit einer konvexen, konkaven oder zylindrischen Form, insbesondere einer zylindrischen Form, handelt.

6. Verfahren nach einem der Ansprüche 2 bis 5, **dadurch gekennzeichnet, dass** jeder Strang einer jeden Gruppe X in das Wirbelbett eindringt und auf dem mindestens einen der Y Spannstücke einer jeden zumindest teilweise in das Pulver eingetauchten Reihe mit einem Winkel α₂ zwischen dem Strang und der Senkrechten des Spannstücks Yₘ von 0 bis 89°, vorzugsweise von 5° bis 85°, vorzugsweise von 5 bis 45°, vorzugsweise von 5° bis 30°, durchläuft.

7. Verfahren nach Anspruch 6, **dadurch gekennzeichnet, dass** jeder Strang einer jeden Gruppe X nach dem Durchlauf auf mindestens einem der Y Spannstücke einer jeden zumindest teilweise in das Pulver eingetauchten Reihe mit einem Winkel α'₂ zwischen dem Strang und der Senkrechten des Spannstücks Yₘ von 0 bis 89°, vorzugsweise von 5° bis 85°, vorzugsweise von 5° bis 45°, vorzugsweise von 5° bis 30°, aus dem Wirbelbett austritt.

8. Verfahren nach einem der Ansprüche 2 bis 7, **dadurch gekennzeichnet, dass** die Verweilzeit im Pulver von 0,01 s bis 10 s, vorzugsweise von 0,1 s bis 5 s und insbesondere von 0,1 s bis 3 s, beträgt.

9. Verfahren nach einem der Ansprüche 2 bis 8, **dadurch gekennzeichnet, dass** der Schritt des Vortränkens mit einem Ausbreiten eines jeden der Nᵢ parallelen Stränge zwischen dem Einlass und dem Auslass des das Wirbelbett umfassenden Tanks erfolgt.

10. Verfahren nach Anspruch 9, **dadurch gekennzeichnet, dass** das Ausbreiten eines jeden der Nᵢ parallelen Stränge mindestens in Höhe eines der Spannstücke Yₘ (30), insbesondere mindestens in Höhe des mindestens einen der Y Spannstücke einer jeden zumindest teilweise in das Pulver eingetauchten Reihe erfolgt.

11. Verfahren nach einem der Ansprüche 1 bis 10, **dadurch gekennzeichnet, dass** die Spannstücke Y einer jeden Reihe identisch sind.

12. Verfahren nach einem der Ansprüche 2 bis 11, **dadurch gekennzeichnet, dass** für jede Reihe m = 3, wobei nach dem Einlass in den Trank (10) ein erstes Spannstück Y₁ (31) für jede Reihe oberhalb des Wirbelbettes angeordnet ist und vor dem Auslass aus dem Tank (10) ein letztes Spannstück Y₃ für jede Reihe (33) oberhalb des Wirbelbettes angeordnet ist, wobei das zumindest teilweise eingetauchte Stück (32) zwischen dem ersten Spannstück Y₁ (31) und dem letzten Spannstück Y₃ für jede Reihe (33) angeordnet ist.

13. Verfahren nach einem der Ansprüche 2 bis 12, **dadurch gekennzeichnet, dass** das Stück (32) vollständig in das Wirbelbett (11) eingetaucht ist.

14. Verfahren nach einem der Ansprüche 2 bis 13, **dadurch gekennzeichnet, dass** der Fasergehalt im Prepreg-Fasermaterial von 45 bis 65 Vol.-%, vorzugsweise von 50 bis 60 Vol-%, insbesondere von 54 bis 60 %, beträgt.

15. Verfahren nach einem der Ansprüche 1 bis 14, **dadurch gekennzeichnet, dass** eine einzelne thermoplastische Polymermatrix verwendet wird und das Pulver des thermoplastischen Polymers verwirbelbar ist.

16. Verfahren nach einem der Ansprüche 1 bis 15, **dadurch gekennzeichnet, dass** es außerdem mindestens einen Schritt des Erwärmens der thermoplastischen Matrix umfasst, der das Schmelzen oder das Beibehalten des Schmelzzustands des thermoplastischen Polymers nach dem Vortränken ermöglicht,
wobei der mindestens eine Schritt des Erwärmens mittels mindestens eines wärmeleitenden oder nicht wärmeleitenden Spannstücks (E) und mindestens eines Heizsystems mit Ausnahme eines Heizkalanders erfolgt,
wobei sich der Strang oder die Stränge in Kontakt mit einem Teil oder der Gesamtheit der Oberfläche des mindestens einen Spannstücks (E) befinden und teilweise oder insgesamt auf der Oberfläche des mindestens einen Spannstücks (E) in Höhe des Heizsystems durchlaufen.

17. Verfahren nach einem der Ansprüche 1 bis 16, **dadurch gekennzeichnet, dass** es außerdem einen Schritt der Formgebung des Strangs oder der parallelen Stränge des getränkten Fasermaterials durch Kalandern mittels mindestens eines Heizkalanders in Form eines einzelnen unidirektionalen Bandes oder mehrerer unidirektionaler paralleler Bänder oder Bahnen mit dem Heizkalander umfasst, wobei der Heizkalander im letzteren Fall mehrere Kalandrierungsrillen, vorzugsweise bis zu 300 Kalandrierungsrillen, in Übereinstimmung mit der Zahl der Bänder und mit einem durch ein Servosystem geregelten Druck und/oder Abstand zwischen den Walzen des Kalanders umfasst.

18. Verfahren nach Anspruch 17, **dadurch gekennzeichnet, dass** der Kalandrierschritt mittels mehrerer Heizkalander erfolgt, die in Bezug auf die Laufrichtung der Faserstränge parallel und/oder in Reihe angeordnet sind.

19. Verfahren nach einem der Ansprüche 17 oder 18, **dadurch gekennzeichnet, dass** der (oder die) Heizkalander ein integriertes Induktions- oder Mikrowellen-Heizsystem, vorzugsweise Mikrowellen-Heizsystem, umfasst (umfassen), das an das Vorhandensein von kohlenstoffhaltigen Füllstoffen im thermoplastischen Polymer oder der Mischung von thermoplastischen Polymeren gebunden ist.

20. Verfahren nach einem der Ansprüche 17 bis 19, **dadurch gekennzeichnet, dass** der (oder die) Heizkalander mit einer vor und/oder nach dem (jedem) Kalander angeordneten zusätzlichen Schnellheizvorrichtung gekoppelt ist (sind), insbesondere einer Mikrowellen- oder Induktions-Heizvorrichtung, die an das Vorhandensein von kohlenstoffhaltigen Füllstoffen im Polymer oder in der Polymermischung gebunden ist, oder einer Infrarot- (IR-) oder Laser-Heizvorrichtung oder durch direkten Kontakt mit einer anderen Wärmequelle wie einer Flamme oder einem heißen Gas.

21. Verfahren nach einem der Ansprüche 1 bis 20, **dadurch gekennzeichnet, dass** der oder die Tränkungsschritt (e) durch einen Beschichtungsschritt des einzelnen Faserbands oder der mehreren parallelen Faserbänder nach dem Tränken durch das Pulver vervollständigt wird (werden), wobei der Beschichtungsschritt vor dem Kalandrierschritt durch ein geschmolzenes thermoplastisches Polymer ausgeführt wird, das mit dem Polymer in Pulverform im Wirbelbett identisch oder davon verschieden sein kann, wobei das geschmolzene Polymer vorzugsweise von der gleichen Beschaffenheit wie das Polymer in Pulverform im Wirbelbett ist, wobei die Beschichtung in Bezug auf das einzelne Faserband oder die mehreren parallelen Faserbänder vorzugsweise mittels einer Querspritzkopfextrusion durchgeführt wird.

22. Verfahren nach einem der Ansprüche 1 bis 21, **dadurch gekennzeichnet, dass** das thermoplastische Polymer außerdem kohlenstoffhaltige Füllstoffe, insbesondere Ruß oder kohlenstoffhaltige Nanofüllstoffe, umfasst, die vorzugsweise aus kohlenstoffhaltigen Nanofüllstoffen, insbesondere Graphenen und/oder Kohlenstoff-Nanoröhrchen oder Mischungen davon ausgewählt sind.

23. Verfahren nach einem der Ansprüche 1 bis 22, **dadurch gekennzeichnet, dass** das thermoplastische Polymer außerdem Flüssigkristallpolymere oder cyclisiertes Poly(butylenterephthalat) oder Mischungen umfasst, die diese als Additive enthalten.

24. Verfahren nach Anspruch 23, **dadurch gekennzeichnet, dass** es sich bei dem mindestens einen thermoplastischen Polymer um ein Polymer, dessen Glasübergangstemperatur so ist, dass Tg ≥ 80 °C ist, oder ein halbkristallines Polymer handelt, dessen Schmelztemperatur Tf ≥ 150 °C ist.

25. Verfahren nach einem der Ansprüche 1 bis 24, **dadurch gekennzeichnet, dass** das Fasermaterial Endlosfasern umfasst, die ausgewählt sind aus Kohlenstoff-, Glas-, Siliciumcarbid-, Basalt-, Siliciumdioxidfasern, Natur-, insbesondere Flachs- oder Hanf-, Lignin-, Bambus-, Sisal-, Seiden- oder Cellulose-, insbesondere Viskosefasern, oder amorphen thermoplastischen Fasern mit einer Glasübergangstemperatur Tg, die höher als die Tg des Polymers oder der Polymermischung ist, wenn letzteres amorph ist, oder höher als die Tf des Polymers oder der Polymermischung ist, wenn letzteres halbkristallin ist, oder halbkristallinen thermoplastischen Fasern mit einer Schmelztemperatur Tf, die höher als die Tg des Polymers oder der Polymermischung ist, wenn letzteres amorph ist, oder höher als die Tf des Polymers oder der Polymermischung ist, wenn letzteres halbkristallin ist, oder einer Mischung von zwei oder mehreren der Fasern, vorzugsweise einer Mischung von Kohlenstoff-, Glas- oder Siliciumcarbidfasern, besonders Kohlenstofffasern.

## Claims

1. Process for the manufacture of a pre-impregnated fibrous material comprising a fibrous material made of continuous fibres and at least one thermoplastic polymer matrix, **characterized in that** said pre-impregnated fibrous material is made of a plurality of unidirectional parallel tapes or webs and **in that** said process comprises a stage of pre-impregnation, in particular homogeneous pre-impregnation, of said fibrous material provided in the form of N parallel rovings (20) by said at least one thermoplastic polymer matrix provided in powder form in a vessel (10), said pre-impregnation stage being carried out by the dry route in said vessel (10),
said N parallel rovings (20) being divided into X groups consisting of Nᵢ rovings which are parallel in the direction of forward progression of the rovings, ΣNᵢ = N and X ≤ N, X being from 2 to 200, each group of parallel rovings progressing forward separately by means of X series consisting of Y tension roller parts (30) in the tank, with Y ≥ 3, and for which one at least of said Y tension roller parts (30) of each series is at least partially immersed in said powder, each group of rovings progressing forward over the same number Y of tension roller parts (30),
said at least one thermoplastic polymer being selected from:
- polymers and copolymers of the family of the aliphatic or cycloaliphatic polyamides (PAs) or of the semi-aromatic PAs (also denoted polyphthalamides (PPAs)),
- polyureas, in particular aromatic polyureas,
- polymers and copolymers of the family of the acrylics, such as polyacrylates, and more particularly polymethyl methacrylate (PMMA) or its derivatives,
- polymers and copolymers of the family of the polyaryletherketones (PAEKs), such as poly(ether ether ketone) (PEEK), or polyaryletherketoneketones (PAEKKs), such as poly(ether ketone ketone) (PEKK) or their derivatives,
- aromatic polyetherimides (PEIs),
- polyarylsulfides, in particular polyphenylene sulfides (PPSs),
- polyarylsulfones, in particular polyphenylene sulfones (PPSUs),
- polyolefins, in particular polypropylene (PP),
- polylactic acid (PLA),
- polyvinyl alcohol (PVA),
- fluoropolymers, in particular poly(vinylidene fluoride) (PVDF), or polytetrafluoroethylene (PTFE) or polychlorotrifluoroethylene (PCTFE),
and their mixtures,
said parallel rovings being separated from one another in said vessel with a space at least equal to the width of each roving, at least at said at least partially immersed tension roller part,
said Y tension roller parts (30) of each series in the vessel being offset in the direction of forward progression of the rovings by a distance at least greater than the thickness of each roving,
control of the content of said at least one thermoplastic polymer matrix in said fibrous material being carried out by control of the residence time of said N rovings in the powder,
the residence time in the powder being identical for each of said rovings,
said N rovings being optionally gathered together outside the powder.

2. Process according to Claim 1, **characterized in that** said vessel comprises a fluidized bed (11).

3. Process according to Claim 2, **characterized in that** each tension roller part Yₘ of each series in the fluidized bed is located at the same height with respect to the bottom of the vessel.

4. Process according to either of Claims 2 and 3, **characterized in that** the Y tension roller parts of each series in the fluidized bed are each equidistant from one another.

5. Process according to one of Claims 2 to 4, **characterized in that** said Y tension roller parts are compression rollers of convex, concave or cylindrical shape, in particular of cylindrical shape.

6. Process according to one of Claims 2 to 5, **characterized in that** each roving of each group X penetrates into said fluidized bed and progresses forward over said at least one of said Y tension roller parts of each series at least partially immersed in said powder, with an angle α₂ formed between the roving and the normal of said tension roller part Yₘ of from 0° to 89°, preferentially from 5° to 85°, preferentially from 5° to 45°, preferentially from 5° to 30°.

7. Process according to Claim 6, **characterized in that** each roving of each group X, after being passed over said at least one of said Y tension roller parts of each series at least partially immersed in said powder, emerges from said fluidized bed with an angle α'₂ formed between the roving and the normal of said tension roller Yₘ of from 0° to 89°, preferentially from 5° to 85°, preferentially from 5° to 45°, preferentially from 5° to 30°.

8. Process according to one of Claims 2 to 7, **characterized in that** the residence time in the powder is of from 0.01 s to 10 s, preferentially from 0.1 s to 5 s and in particular from 0.1 s to 3 s.

9. Process according to one of Claims 2 to 8, **characterized in that** said pre-impregnation stage is carried out with fanning out of each Nᵢ parallel rovings between the inlet and the outlet of the vessel comprising said fluidized bed.

10. Process according to Claim 9, **characterized in that** said fanning out of each Nᵢ parallel rovings is carried out at least at one of the tension roller parts Yₘ (30), in particular at least at said at least one of said Y tension roller parts of each series at least partially immersed in said powder.

11. Process according to one of Claims 1 to 10, **characterized in that** said tension roller parts Y of each series are identical.

12. Process according to one of Claims 2 to 11, **characterized in that** m = 3 for each series, a first tension roller part Y₁ (31) for each series being located above said fluidized bed after the inlet of the vessel (10) and a final tension roller part Y₃ for each series (33) being located above said fluidized bed before the outlet of the vessel (10), said at least partially immersed part (32) being located between the first tension roller part Y₁ (31) and said final tension roller part Y₃ for each series (33).

13. Process according to one of Claims 2 to 12, **characterized in that** said part (32) is completely immersed in said fluidized bed (11).

14. Process according to one of Claims 2 to 13, **characterized in that** the content of fibres in said pre-impregnated fibrous material is of from 45% to 65% by volume, preferably from 50% to 60% by volume, particularly from 54% to 60%.

15. Process according to one of Claims 1 to 14, **characterized in that** a single thermoplastic polymer matrix is used and the thermoplastic polymer powder is fluidizable.

16. Process according to one of Claims 1 to 15, **characterized in that** it additionally comprises at least one stage of heating the thermoplastic matrix which makes it possible to melt or to keep melted said thermoplastic polymer after pre-impregnation,
said at least one heating stage being carried out by means of at least one tension roller part (E) which does or does not conduct heat and of at least one heating system, with the exception of a heated calender,
said roving or said rovings being in contact with a part or the whole of the surface of said at least one tension roller part (E) and progressing forward partially or completely at the surface of said at least one tension roller part (E) at the heating system.

17. Process according to one of Claims 1 to 16, **characterized in that** it additionally comprises a stage of shaping said roving or said parallel rovings of said impregnated fibrous material, by calendering by means of at least one heated calender, in the form of a single unidirectional tape or of a plurality of unidirectional parallel tapes or webs with, in the latter case, said heated calender comprising a plurality of calendering grooves, preferably up to 300 calendering grooves, in conformity with the number of said tapes, and with a pressure and/or a space between the rollers of said calender regulated by a control system.

18. Process according to Claim 17, **characterized in that** the calendering stage is carried out by means of a plurality of heated calenders, mounted in parallel and/or in series with respect to the direction of forward progression of the rovings of fibres.

19. Process according to either of Claims 17 and 18, **characterized in that** said heated calender(s) comprise(s) an integrated system for heating by induction or by microwaves, preferably by microwaves, coupled to the presence of carbon-based fillers in said thermoplastic polymer or mixture of thermoplastic polymers.

20. Process according to one of Claims 17 to 19, **characterized in that** said heated calender(s) is (are) coupled to a rapid additional heating device, located before and/or after said (each) calender, in particular a device for heating by microwaves or induction coupled to the presence of carbon-based fillers in said polymer or in said mixture of polymers, or an infrared IR or laser heating device or a device for heating by direct contact with another heat source, such as a flame or a hot gas.

21. Process according to one of Claims 1 to 20, **characterized in that** said impregnation stage(s) is (are) supplemented by a stage of covering said single roving or said plurality of parallel rovings after impregnation by the powder, said covering stage being carried out before said calendering stage, by a molten thermoplastic polymer, which can be identical to or different from said polymer in powder form in the fluidized bed, said molten polymer being preferably of the same nature as said polymer in powder form in the fluidized bed, preferably with said covering being carried out by crosshead extrusion, with respect to said single roving or to said plurality of parallel rovings.

22. Process according to one of Claims 1 to 21, **characterized in that** said thermoplastic polymer additionally comprises carbon-based fillers, in particular carbon black or carbon-based nanofillers, preferably chosen from carbon-based nanofillers, in particular graphenes and/or carbon nanotubes and/or carbon nanofibrils or their mixtures.

23. Process according to one of Claims 1 to 22, **characterized in that** said thermoplastic polymer additionally comprises liquid crystal polymers or cyclized poly(butylene terephthalate), or mixtures containing them, as additives.

24. Process according to Claim 23, **characterized in that** said at least one thermoplastic polymer is a polymer, the glass transition temperature of which is such that Tg ≥ 80°C, or a semi-crystalline polymer, the melting point of which M.p. ≥ 150°C.

25. Process according to one of Claims 1 to 24, **characterized in that** said fibrous material comprises continuous fibres selected from carbon, glass, silicon carbide, basalt or silica fibres, natural fibres, in particular flax or hemp, lignin, bamboo, sisal, silk or cellulose fibres, in particular viscose fibres, or amorphous thermoplastic fibres with a glass transition temperature Tg greater than the Tg of said polymer or said mixture of polymers when the latter is amorphous or greater than the M.p. of said polymer or said mixture of polymers when the latter is semi-crystalline, or semi-crystalline thermoplastic fibres with a melting point M.p. greater than the Tg of said polymer or said mixture of polymers when the latter is amorphous or greater than the M.p. of said polymer or said mixture of polymers when the latter is semi-crystalline, or a mixture of two or of several of said fibres, preferably a mixture of carbon, glass or silicon carbide fibres, in particular carbon fibres.
